# EUROPEAN PATENT APPLICATION

(11) **EP 2 395 591 A1**
(43) Date of publication of application: **14.12.2011**
(21) Application number: 10738460.4
(22) Date of filing: 28.01.2010
(51) Int. Cl.: H01M 10/0585, H01M 2/02, H01M 4/13, H01M 4/485, H01M 4/66, H01M 10/052, H01M 10/0562

(54) **SOLID STATE THIN FILM LITHIUM ION SECONDARY BATTERY AND MANUFACTURING METHOD THEREFOR**

(30) Priority: 03.02.2009 JP 2009022597
(71) Applicant: Sony Corporation, Tokyo 108-0075 (JP)
(72) Inventor: SABI Yuichi, Tokyo 108-0075 (JP); HINOKUMA Koichiro, Tokyo 108-0075 (JP); TAKAHARA Katsunori, Tokyo 108-0075 (JP); MORIOKA Hiroyuki, Tokyo 108-0075 (JP); FURUYA Tatsuya, Tokyo 108-0075 (JP)
(74) Representative: Müller - Hoffmann & Partner
(86) International application number: PCT/JP2010/051128
(87) International publication number: WO 2010/090126

(57) **Abstract**

A high-performance and inexpensive thin film solid state lithium ion secondary battery that is able to be charged and discharged in the air and is able to be manufactured stably at a favorable yield, and a method of manufacturing the same are provided. The thin film solid state lithium ion secondary battery has an electric insulating substrate 10 formed from an organic resin, an inorganic insulating film provided on the substrate face, a cathode-side current collector film 30, a cathode active material film 40, a solid electrolyte film 50, an anode-side current collector protective film 68, and an anode-side current collector film 70. In the thin film solid state lithium ion secondary battery, the cathode-side current collector film and/or the anode-side current collector film is formed on the inorganic insulating film face. The anode-side current collector protective film is formed from a conductive oxide including at least any one of an oxide of Sn, In, and Zn, and holds the total amount of lithium associated with charge and discharge roughly constant. The thickness of the anode-side current collector protective film is 2 nm or more and 22 nm or less. The thickness of the inorganic insulating film is 5 nm or more and 500 nm or less. The inorganic insulating film contains at least any one of an oxide, a nitride, and a sulfide containing one of Si, Al, Cr, Zr, Ta, Ti, Mn, Mg, and Zn.

## Description

### Technical Field

The present invention relates to a lithium ion battery, and particularly relates to a thin film solid state lithium ion secondary battery in which all layers that are formed on a substrate and compose the battery are able to be formed by dry process and a method of manufacturing the same.

### Background Art

A lithium ion secondary battery has a higher energy density and more superior charge and discharge cycle characteristics compared to other secondary batteries, and thus the lithium ion secondary battery is widely used as an electric power source of a mobile electronic device. In the lithium ion secondary battery using an electrolytic solution as an electrolyte, reducing its size and its thickness is limited. Thus, a polymer battery using a gel electrolyte and a thin film solid state battery using a solid electrolyte have been developed.

In the polymer battery using the gel electrolyte, reducing its size and its thickness is more easily enabled than in batteries using an electrolytic solution. However, reducing its size and its thickness is limited in order to securely seal the gel electrolyte.

The thin film solid state battery using the solid electrolyte is composed of layers formed on a substrate, that is, is composed of an anode-side current collector film, an anode active material film, a solid electrolyte film, a cathode active material film, and a cathode current collector film. In the thin film solid state battery using the solid electrolyte, its thickness and its size are able to be more decreased by using a thin substrate or a thin solid electrolyte film as a substrate. Further, in the thin film solid state battery, a solid nonaqueous electrolyte is able to be used as an electrolyte and the all respective layers composing the battery are able to be solid. Thus, there is no possibility that deterioration is caused by leakage, and a member for preventing leakage and corrosion is not necessitated differently from in the polymer battery using the gel electrolyte. Accordingly, in the thin film solid state battery, the manufacturing process is able to be simplified, and safety thereof may be high.

In the case where decreasing its size and its thickness is realized, the thin film solid state battery is able to be incorporated in an electric circuit board in a manner of on-chip. Further, in the case where a polymer substrate is used as an electric circuit board and the thin film solid state battery is formed thereon, a flexible battery is able to be formed. Such a flexible battery is able to be built in a card electronic money, an RF tag and the like.

For the thin film solid state lithium ion secondary battery in which all layers composing the battery are formed from solid described above, many reports have been made.

First, in the after-mentioned Patent document 1 entitled "SEMICONDUCTOR SUBSTRATE MOUNTED SECONDARY BATTERY," the following description is given.

In an embodiment of Patent document 1, an insulating film is formed on a silicon substrate, a wiring electrode is formed thereon, and a cathode and an anode are respectively arranged in line on the wiring electrode. That is, the cathode and the anode are not layered. Sine such arrangement is adopted, the thickness of the battery itself is able to be more decreased. Further, in the case of this embodiment, the substrate is able to be changed to an insulator.

Moreover, in the after-mentioned Patent document 2 entitled "THIN FILM SOLID STATE SECONDARY BATTERY AND COMPOUND DEVICE INCLUDING THE SAME," the following description is given.

A lithium ion thin film solid state secondary battery of Patent document 2 is formed by sequentially layering a current collector layer on a cathode side (cathode current collector layer), a cathode active material layer, a solid electrolyte layer, an anode active material layer, a current collector layer on an anode side (anode current collector layer), and a moisture barrier film on a substrate. It is to be noted that the lamination on the substrate may be made in the order of the current collector layer on the anode side, the anode active material layer, the solid electrolyte layer, the cathode active material layer, the current collector layer on the cathode side, and the moisture barrier film.

As the substrate, glass, semiconductor silicon, ceramic, stainless steel, a resin substrate or the like is able to be used. As the resin substrate, polyimide, PET or the like is able to be used. Further, as long as handling is available without deformation, a flexible thin film is able to be used as the substrate. The foregoing substrates preferably have additional characteristics such as characteristics to improve transparency, characteristics to prevent diffusion of alkali element such as Na, characteristics to improve heat resistance, and gas barrier characteristics. To this end, a substrate in which a thin film such as SiO₂ and TiO₂ is formed on the surface by sputtering method or the like may be used.

Moreover, in the after-mentioned Patent document 3 entitled "A METHOD OF MANUFACTURING ALL SOLID STATE LITHIUM SECONDARY BATTERY AND ALL SOLID STATE LITHIUM SECONDARY BATTERY," a description is given of an all solid state lithium secondary battery capable of avoiding short circuit between a cathode film and an anode film in a battery edge portion.

Further, in the after-mentioned Non patent document 1, a description is given of fabricating a Li battery composed of a thin film formed by sputtering method.

As an anode of the existing bulk Li batteries, carbon is widely used. Further, though it has been considered to use other material, practical usage may be difficult in terms of durability and the like. For example, in experiments of the lithium ion secondary batteries, a Li metal is often used as a high capacity material for composing the anode, and thereby high electric potential is obtained. The Li metal has not been practically used as a component material of the anode for the following reason. That is, in the case where Li is precipitated on the metal surface on the anode side, Li is grown in the form of needles, activity is lowered, battery characteristics are rapidly deteriorated, and there is a problem in durability.

In the after-mentioned Non patent document 2, a description is given of a lithium free thin film battery.

### Citation List

### Patent Document

Patent document 1: Japanese Unexamined Patent Application Publication No. 10-284130 (paragraph 0032, FIG. 4)
Patent document 2: Japanese Unexamined Patent Application Publication No. 2008-226728 (paragraphs 0024 to 0025, FIG. 1)
Patent document 3: Japanese Unexamined Patent Application Publication No. 2008-282687 (paragraphs 0017 to 0027)

### Non Patent Document

Non patent document 1: J. B. Bates et al., "Thin-Film lithium and lithium-ion batteries," Solid State Ionics, 135, 33-45 (2000) (2. Experimental procedures, 3. Results and discussion)
Non patent document 2: B. J. Neudecker et al., "Lithium-Free Thin-Film Battery with In Situ Plated Li Anode," J. Electrochem. Soc., 147, 517-523 (2000) (Experimental)

### Summary of the Invention

Regarding the solid electrolyte disclosed in Non patent document 1, a thin film is able to be formed by sputtering method. In addition, since the solid electrolyte functions in a state of amorphous, crystallization by annealing is not necessitated.

Many materials used for a cathode of existing bulk Li batteries is crystal of a Li-containing metal oxide such as LiCoO₂ LiMn₂O₄, LiFePO₄, and LiNiO₂. Such a material is generally used in a state of crystal phase. Thus, in the case where a film is formed by thin film formation process such as sputtering method, in general, a substrate should be heated in forming the film and post annealing should be made after forming the film. Therefore, a material with high heat resistance is used for the substrate, resulting in high cost.

Further, heating process leads to longer takt time. Further, heating process causes electrode oxidation and interelectrode short circuit due to structure change at the time of crystallization of cathode material, resulting in yield lowering. Meanwhile, in the case where a cathode active material is amorphous, since the internal resistance is high, voltage drop becomes problematic.

In terms of manufacturing cost of the battery, a plastic substrate is preferably used. Further, in terms of using a flexible substrate, the plastic substrate is preferably used as well. From the aspect of manufacturing cost of the battery, a material used for a cathode such as LiCoO₂ LiMn₂O₄, LiFePO₄, and LiNiO₂ is preferably formed on a plastic substrate at room temperature without providing post annealing.

The inventors of the present invention found the following. That is, the foregoing generally used cathode active materials all deteriorate drastically to moisture. In the case where the water absorption coefficient of the plastic substrate is high, if the cathode active material is directly contacted with the substrate, generated deterioration causes short circuit, resulting in malfunction as a battery, or lowered manufacturing yield. Such deterioration and lowered manufacturing yield are not able to be solved even if a protective film to protect the respective layers composing the battery is formed after forming the respective layers composing the battery.

Further, in the case where a substrate with low water absorption coefficient such as quartz glass and a Si wafer is used, in all reports on the existing thin film batteries, charge and discharge experiments of the manufactured batteries have been conducted in a dry room or in an environment filled with inert gas such as Ar and nitrogen. The reason why the charge and discharge experiments of the manufactured batteries are conducted in the environment filled with the inert gas is the fact that the respective layers and the substrate composing the battery are subject to moisture contained in the air and their deterioration based on the moisture quickly proceeds. Thus, such experiments do not endorse practical utility.

In the existing bulk Li batteries, carbon is widely used as an anode. However, since sputtering rate for carbon is significantly slow, film formation by sputtering method is difficult, and mass productivity is significantly low.

In the technique described in the Non patent document 2, experiment of an anode in which Li is precipitated is performed in a thin film battery. An anode active material does not initially exist. At the time of the first charge, Li is precipitated on the anode-side current collector, which is a virtual anode active material. However, as a result, durability to repeated charge and discharge is low, which is not practical.

The present invention is made to solve the above-mentioned problems, and it is an object of the present invention to provide a high-performance and inexpensive thin film solid state lithium ion secondary battery that is able to be charged and discharged in the air, enables stable driving, and is able to be manufactured stably at a favorable yield even if a film composing the battery is formed from an amorphous film, and a method of manufacturing the same.

That is, the present invention relates to a thin film solid state lithium ion secondary battery having: an electric insulating substrate (such as a substrate 10 according to an after-mentioned embodiment); a cathode-side current collector film; a cathode active material film; a solid electrolyte film; an anode-side current collector protective film, and an anode-side current collector film, in which the cathode-side current collector film, the cathode active material film, the solid electrolyte film, the anode-side current collector protective film, and the anode-side current collector film are formed on the electric insulating substrate, the anode-side current collector protective film is a layer formed between the solid electrolyte film and the anode-side current collector film and is a layer for inhibiting migration of lithium to the anode-side current collector film.

Further, the present invention relates to a method of manufacturing a thin film solid state lithium ion secondary battery including the steps of: forming a cathode-side current collector film; forming a cathode active material film; forming a solid electrolyte film; forming an anode-side current collector protective film; and forming an anode-side current collector film, in which the anode-side current collector protective film is a layer formed between the solid electrolyte film and the anode-side current collector film, and is a layer for inhibiting migration of lithium to the anode-side current collector film.

According to the present invention, the thin film solid state lithium ion secondary battery includes: the electric insulating substrate; the cathode-side current collector film; the cathode active material film; the solid electrolyte film; the anode-side current collector protective film; and the anode-side current collector film. The cathode-side current collector film, the cathode active material film, the solid electrolyte film, the anode-side current collector protective film, and the anode-side current collector film are formed on the electric insulating substrate, and the anode-side current collector protective film is a layer formed between the solid electrolyte film and the anode-side current collector film and is a layer for inhibiting migration of lithium to the anode-side current collector film. Therefore, the anode-side current collector protective film is a protective film for a Li-excessive layer formed on an anode side interface of the solid electrolyte film. Li diffusion to the anode-side current collector film is inhibited by the anode-side current collector protective film, and deterioration of the anode-side current collector film is able to be prevented. Thus, even if the active material film, the solid electrolyte film, and the anode-side current collector protective film are formed by an amorphous film, a thin film solid state lithium ion secondary battery as a high-performance and small thin film battery that is able to be charged and discharged in the air, that enables stable driving, and that is able to improve repeated charge and discharge characteristics and durability is able to be provided.

Further, according to the present invention, the method of manufacturing a thin film solid state lithium ion secondary battery includes the steps of: forming the cathode-side current collector film; forming the cathode active material film; forming the solid electrolyte film; forming the anode-side current collector protective film; and forming the anode-side current collector film, in which the anode-side current collector protective film is a layer formed between the solid electrolyte film and the anode-side current collector film and is a layer for inhibiting migration of lithium to the anode-side current collector film. Therefore, the anode-side current collector protective film is a protective film for a Li-excessive layer formed on an anode side interface of the solid electrolyte film. Li diffusion to the anode-side current collector film is inhibited by the anode-side current collector protective film, and deterioration of the anode-side current collector film is able to be prevented. Thus, a method of forming a thin film solid state lithium ion secondary battery as a high-performance and small thin film battery that is able to be charged and discharged in the air, that enables stable driving, and that is able to improve repeated charge and discharge characteristics and durability even if the cathode active material film, the solid state electrolyte film, and the anode-side current collector protective film are formed from an amorphous film is able to be provided.

### Brief Description of Drawings

[FIG. 1] FIG. 1 is a view explaining a schematic structure of a solid state lithium ion battery in an embodiment of the present invention.
[FIG. 2] FIG. 2 is a view explaining a schematic structure of a solid state lithium ion battery in an embodiment of the present invention.
[FIG. 3] FIG. 3 is a view explaining a schematic structure of a solid state lithium ion battery in an embodiment of the present invention.
[FIG. 4] FIG. 4 is a view explaining a schematic structure of a solid state lithium ion battery in an embodiment of the present invention.
[FIG. 5] FIG. 5 is a diagram explaining short summary of manufacturing process of the solid state lithium ion battery in the embodiment of the present invention.
[FIG. 6] FIG. 6 is a diagram explaining structures of respective layers of solid state lithium ion batteries in Examples and Comparative examples of the present invention.
[FIG. 7] FIG. 7 is a diagram illustrating charge and discharge curves in an example of the present invention.
[FIG. 8] FIG. 8 is a diagram illustrating charge and discharge cycle characteristics in the example of the present invention.
[FIG. 9] FIG. 9 is a diagram illustrating charge and discharge curves in a comparative example of the present invention.
[FIG. 10] FIG. 10 is a diagram illustrating charge and discharge cycle characteristics in a comparative example of the present invention.
[FIG. 11] FIG. 11 is a diagram illustrating charge and discharge curves in a comparative example of the present invention.
[FIG. 12] FIG. 12 is a diagram illustrating charge and discharge cycle characteristics in a comparative example of the present invention.
[FIG. 13] FIG. 13 is a diagram illustrating charge and discharge curves in an example of the present invention.
[FIG. 14] FIG. 14 is a diagram illustrating charge and discharge curves in a comparative example of the present invention.
[FIG. 15] FIG. 15 is a diagram illustrating charge and discharge curves in an example of the present invention.
[FIG. 16] FIG. 16 is a diagram illustrating charge and discharge curves in a comparative example of the present invention.
[FIG. 17] FIG. 17 is a diagram explaining relation between a usage efficiency and a film thickness of anode-side current collector protective film of the solid state lithium ion batteries in the examples of the present invention.

### Description of Embodiments

In a thin film solid state lithium ion secondary battery of the present invention, it is preferable that a total amount of lithium associated with charge and discharge be held roughly constant by an anode-side current collector protective film. The total amount of lithium associated with charge and discharge is held roughly constant by the anode-side current collector protective film, and thus a high-performance and inexpensive thin film solid state lithium ion secondary battery that is able to hold charge and discharge capacity of the battery roughly constant is able to be provided.

Further, a structure in which the film thickness of the anode-side current collector protective film is 2 or more and 22 nm or less is preferable. In the case where the film thickness of the anode-side current collector protective film is less than 2 nm and the case where the film exceeds 22 nm, it is difficult to secure usage efficiency in the battery. However, since the film thickness of the anode-side current collector protective film is 2 nm or more and 22 nm or less, large usage efficiency is able to be secured. Here, the usage efficiency is defined by a value obtained by dividing a capacity capable of being used when the battery voltage reaches 2.5 V at the time of discharge by a theoretical capacity of a cathode active material film.

Further, a structure in which the film thickness of the anode-side current collector protective film is 3 nm or more and 15 nm or less is preferable. Since the film thickness of the anode-side current collector protective film is 3 nm or more and 15 nm or less, battery mass productivity is able to be secured and the battery is able to have further greater usage efficiency.

Further, a structure in which the film thickness of the anode-side current collector protective film is 2 nm or more, and the anode-side current collector protective film has a structure with a film thickness by which the theoretical capacity of charge and discharge thereof becomes half or less of the theoretical capacity of charge and discharge of the cathode active material film is preferable. Since the film thickness of the anode-side current collector protective film is 2 nm or more and the anode-side current collector protective film has a film thickness by which the theoretical capacity of charge and discharge thereof becomes half or less of the theoretical capacity of charge and discharge of the cathode active material film, in charge and discharge curve, a Li-excessive layer formed on the anode side interface of the solid electrolyte film functions as an anode active material at the time of discharge, and in the charge and discharge curve, a region where discharge is generated is able to be made sufficiently wide and battery capacity is able to be secured.

Further, a structure in which the anode-side current collector protective film is a structure formed by a conductive oxide is preferable. Since the anode-side current collector protective film is formed by the conductive oxide, durability to repeated charge and discharge is able to be improved without losing charge and discharge characteristics.

Further, a structure in which the conductive oxide includes at least any one of a Sn oxide, an In oxide, and a Zn oxide is preferable. Since the conductive oxide includes at least any one of a Sn oxide, an In oxide, and a Zn oxide, durability to repeated charge and discharge is able to be improved without losing charge and discharge characteristics.

Further, a structure in which the conductive oxide is an oxide to which an element for improving conductivity is added is preferable. Since the conductive oxide is an oxide to which an element for improving conductivity is added, conductivity of the conductive oxide is able to be improved and durability to repeated charge and discharge is able to be improved without losing charge and discharge characteristics.

Further, a structure in which an electric insulating substrate is a substrate formed from an organic resin, an insulating film formed from an inorganic material is provided on the substrate face, and a cathode-side current collector film and/or an anode-side current collector film is formed on the insulating film face is preferable. Since the electric insulating substrate is the substrate formed from the organic resin, the insulating film formed from the inorganic material is provided on the substrate face, and the cathode-side current collector film and/or the anode-side current collector film is formed on the insulating film face, even if the cathode active material film, a solid state electrolyte film, and the anode-side current collector protective film are formed as amorphous, these films are formed above the insulating film, and thus a high-performance and inexpensive thin film solid state lithium ion secondary battery that is able to be charged and discharged in the air, enables stable driving, and is able to improve durability is able to be provided.

Further, a structure in which the area of the insulating film is larger than the area of the cathode-side current collector film or the anode-side current collector film, or the total area of the cathode-side current collector film and the anode-side current collector film is preferable. Since the area of the insulating film is larger than the area of the cathode-side current collector film or the anode-side current collector film, or the total area of the cathode-side current collector film and the anode-side current collector film, moisture permeating the electric insulating substrate is able to be inhibited by the insulating film. Thus, a high-performance and inexpensive thin film solid state lithium ion secondary battery that is able to inhibit influence of moisture on the cathode-side current collector film, the cathode active material film, the solid electrolyte film, the anode-side current collector protective film, and the anode-side current collector film that compose the battery and is able to improve durability is able to be provided.

Further, a structure in which the cathode active material film is formed from a material containing Li is preferable. Since the cathode active material film is formed from the material containing Li, a thin film solid state lithium ion secondary battery having a large discharge capacity is able to be provided.

Further, a structure in which the cathode active material film is formed from an oxide containing at least one of Mn, Co, Fe, P, Ni, and Si and Li is preferable. Since the cathode active material film is formed from an oxide containing at least one of Mn, Co, Fe, P, Ni, and Si and Li, a thin film solid state lithium ion secondary battery that has a large discharge capacity is able to be provided.

Further, a structure in which a protective film that covers the cathode-side current collector film, the cathode active material film, the solid electrolyte film, the anode-side current collector protective film, and the anode-side current collector film and that is formed from an ultraviolet curing resin is provided is preferable. Since the protective film that covers the cathode-side current collector film, the cathode active material film, the solid electrolyte film, the anode-side current collector protective film, and the anode-side current collector film and that is formed from the ultraviolet curing resin is provided, intrusion of moisture and gas in the environment under which the thin film solid state lithium ion secondary battery is placed is able to be inhibited, and durability is able to be improved.

Further, a structure in which the anode-side current collector film is formed from Ti or an alloy having Ti as a main component is preferable. Since the anode-side current collector film is formed from Ti or the alloy having Ti as a main component, the cathode-side current collector film has superior conductivity and superior durability.

In a method of manufacturing a thin film solid state lithium ion secondary battery of the present invention, a structure in which a step of forming the insulating film formed from the inorganic material on the electric insulating substrate face formed from the organic resin and a step of forming the cathode-side current collector film and/or the anode-side current collector film on the insulating film face are included is preferable. Since the method of manufacturing a thin film solid state lithium ion secondary battery of the present invention includes the step of forming the insulating film formed from the inorganic material on the electric insulating substrate face formed from the organic resin and the step of forming the cathode-side current collector film and/or the anode-side current collector film on the insulating film face, the cathode-side current collector film and/or the anode-side current collector film is able to be formed on the insulating film face more tightly than in the case that the cathode-side current collector film and/or the anode-side current collector film is directly formed on the electric insulating substrate face. Thus, even if the cathode active material film, the solid electrolyte film, and the anode-side current collector protective film are formed as amorphous, these films are formed above the insulating film, and thus a high-performance and inexpensive thin film solid state lithium ion secondary battery that is able to be charged and discharged in the air, enables stable driving, is able to improve durability, and is able to be manufactured stably at improved manufacturing yield is able to be provided.

It is to be noted that in the following description, in some cases, "thin film solid state lithium ion secondary battery" is summarily given as "solid state lithium ion battery," "thin film lithium ion battery" or the like.

The thin film solid state lithium ion secondary battery based on the present invention has the electric insulating substrate formed from the organic resin, the inorganic insulating film provided on the substrate face, the cathode-side current collector film, the cathode active material film, the solid electrolyte film, the anode-side current collector protective film, and the anode-side current collector film. In the thin film solid state lithium ion secondary battery based on the present invention, the cathode-side current collector film and/or the anode-side current collector film is tightly formed on the inorganic insulating film face.

The anode-side current collector protective film is formed by a conductive oxide including at least any one of an oxide of Sn, In, and Zn, and the total amount of lithium associated with charge and discharge is held roughly constant.

The thickness of the inorganic insulating film is 5 nm or more and 500 nm or less, and contains at least any one of an oxide, a nitride, and a sulfide. The thin film solid state lithium ion secondary battery is able to be charged and discharged in the air, its performance is high, and is able to be manufactured at favorable yield and inexpensively.

By setting the film thickness of the inorganic insulating film to a value 5 nm or more and 500 nm or less, short circuit generation caused by charge and discharge made immediately after manufacturing the battery (simply referred to as initial short circuit as well) is able to be prevented, short circuit due to repeated charge and discharge of the battery is able to be prevented, bending of the electric insulating substrate and impact are able to be tolerated and cracks are not generated. Thus, a high-performance and inexpensive thin film solid state lithium ion secondary battery that is able to prevent short circuit and is able to improve durability is able to be provided.

Further, by setting the film thickness of the inorganic insulating film to a value 10 nm or more and 200 nm or less, sufficient film thickness is more stably obtained, the defective fraction due to initial short circuit is able to be more decreased, and a function as a battery is able to be retained even if the electric insulating substrate is bent.

In the thin film solid state lithium ion secondary battery based on the present invention, the anode is not present at the time of manufacturing the thin film solid state lithium ion secondary battery, the anode active material film is not formed, and the anode-side current collector protective film is formed in place of the anode active material film. The anode active material film is generated on the anode side at the time of charge. The layer generated on the anode side is Li metal or a layer excessively containing Li on the anode side interface of the solid electrolyte film (hereinafter referred to as Li-excessive layer). The anode-side current collector protective film is formed as a protective film for the Li-excessive layer to improve durability to repeated charge and discharge without losing charge and discharge characteristics, while using the Li-excessive layer as the anode active material.

The film thickness of the anode-side current collector protective film is preferably sufficiently thinner than the film thickness of the cathode active material film and is 2 nm or more to fulfill protective function for the Li-excessive layer. Moreover, the film thickness of the anode-side current collector protective film is preferably 15 nm or less to avoid Li from being inserted in the anode-side current collector protective film and causing decrease in charge capacity. Alternatively, the anode-side current collector protective film preferably has a film thickness by which, in the case where the anode-side current collector protective film is regarded as the anode active material, a Li-content theoretical capacity of the anode-side current collector protective film is half or less of the Li-content theoretical capacity of the cathode active material layer, and has a film thickness of 2 nm or more. Since the film thickness of the anode-side current collector protective film is sufficiently thinner than the thickness of the cathode active material film, most of the anode-side current collector protective film functions as the protective film for the Li-excessive layer.

The anode-side current collector protective film of the present invention is preferably a conductive oxide film, and specifically is an oxide containing In, Zn, Sn, and a plurality of these elements. These elements are known as transparent conductive film, and are materials on which various studies are being conducted as an anode material for a Li ion battery.

In the present invention, in the case where the anode-side current collector protective film is formed by the foregoing conductive oxide film, the film thickness of the anode-side current collector protective film is sufficiently thinner than the film thickness of the cathode active material film, and is a film thickness by which, in the case where the anode-side current collector protective film is regarded as the anode active material, a Li-content theoretical capacity of the anode-side current collector protective film is half or less of the Li-content theoretical capacity of the cathode active material layer, and the oxide film does not function as the anode active material. At initial charge of the battery, a portion of the anode-side current collector protective film acts as the anode active material. However, the anode-side current collector protective film immediately becomes fully charged, and the Li-excessive layer is subsequently generated. Further, in subsequent charge and discharge, only repeated generation and disappearance of the Li-excessive layer is used. Therefore, in the Li ion battery of the present invention, the Li-excessive layer is a virtual anode active material.

Although the anode-side current collector protective film partially inserts Li at the time of initial charge of the battery, the Li content is held at a constant value in the course of subsequent charge and discharge, and as a result, Li diffusion into the anode-side current collector film is inhibited, and deterioration of the anode-side current collector film is inhibited. Thus, repeated charge and discharge characteristics are able to be significantly favorable, and further, there is an effect of minimizing loss in the amount of charge caused by Li diffusion into the anode-side current collector film. If the anode-side current collector protective film is not present, Li diffuses into the anode-side current collector film and the total amount of Li associated with charge and discharge of the battery is not able to be held at a constant value, and thereby, charge and discharge characteristics deteriorate.

In addition, the thickness of the Li-excessive layer formed on the anode side interface of the solid electrolyte film is changed according to the thickness of the cathode active material film. However, it is enough that the anode-side current collector protective film sufficiently functions as a protective film for the Li-excessive layer formed on the anode side interface of the solid electrolyte film. Thus, the film thickness of the anode-side current collector protective film has no direct relation with the thickness of the Li-excessive layer. Accordingly, the film thickness of the anode-side current collector protective film does not depend on the thickness of the cathode active material film.

The present invention takes advantage of, in the case where the capacity of the anode active material is smaller than the Li amount within the cathode active material, Li that is not able to be inserted into the anode active material being precipitated on the interface and forming the Li-excessive layer, and the Li-excessive layer functioning as the anode active material. In the present invention, the film thickness of the anode-side current collector protective film is formed sufficiently thinner than the cathode active material film, and is in a state where the anode active material is virtually not present in an uncharged state.

Since the anode-side current collector protective film in the present invention may be a material used as the anode active material, in this case, to be more precise, a part of the anode-side current collector protective film functions as the anode active material, and the remaining part functions as the protective film for the Li-excessive layer. In the case where the film thickness of the anode-side current collector protective film is sufficiently thinner than the cathode active material film, most of the anode-side current collector protective film is used as the protective film.

The battery of the present invention has a structure in which the anode-side current collector protective film is formed sufficiently thinner than the film thickness of the cathode active material layer, and the Li-excessive layer formed by precipitation on the interface and functioning as the anode active material handles half or more of battery driving.

In the present invention, in the case where a plastic substrate is used, the thin film solid state lithium ion secondary battery is formed on the substrate face, and the inorganic insulating film is formed at least on the portion where the substrate is contacted with the battery of the substrate face, high manufacturing yield and high repeated charge and discharge characteristics are able to be realized.

In the case where an organic insulating substrate having high moisture permeation rate such as a polycarbonate (PC) substrate is used as a plastic substrate, moisture permeation from the substrate causes a defect. However, by providing the inorganic insulating film tightly at least in the region where the organic insulating substrate is contacted with the battery of the organic insulating substrate, moisture from atmosphere in which the substrate mounted with the battery is placed is able to be blocked. By forming the inorganic insulating film on the substrate face, initial short circuit rate immediately after manufacturing is decreased, and manufacturing yield is improved. Further, since short circuit ratio after repeated charge and discharge is lowered, failure ratio is lowered. Further, improvement of the charge and discharge characteristics is able to be realized.

The foregoing inorganic insulating film is a simple body of an oxide, a nitride, or a sulfide of Si, Cr, Zr, Al, Ta, Ti, Mn, Mg, and Zn, or a mixture thereof. More specifically, the inorganic insulating film is Si₃N₄, SiO₂, Cr₂O₃, ZrO₂, Al₂O₃, TaO₂, TiO₂, Mn₂O₃, MgO, ZnS or the like or a mixture thereof.

Since a sufficient film thickness is necessitated as the inorganic insulating film, the thickness of the inorganic insulating film is preferably 5 nm or more. Further, in the case where the inorganic insulating film is excessively large, since internal stress of the inorganic insulating film is high, film separation and a crack are easily generated. In particular, in the case where the substrate has flexibility, such a crack is easily generated in the case where the substrate is bent, and thus the film thickness is preferably 500 nm or less.

According to the present invention, even if the films composing the thin film lithium ion battery are formed from an amorphous film, a high performance thin film solid state lithium ion secondary battery that is able to be charged and discharged in the air, enables stable driving, and is able to improve charge and discharge characteristics and repeated charge and discharge durability is able to be realized.

Further, even if the films composing the battery are formed from an amorphous film, since the films are formed on the inorganic insulating film provided on the substrate face, a high performance and inexpensive thin film solid state lithium ion secondary battery that is able to be charged and discharged in the air, enables stable driving, is able to improve durability, and is able to be manufactured stably at improved manufacturing yield is able to be realized. Further, according to the present invention, while the plastic substrate is used and all film formation steps are performed at room temperature, a favorable drive voltage and high repeated charge and discharge characteristics are able to realized.

According to the present invention, even if the films composing the thin film lithium ion battery are formed from an amorphous film, a high performance thin film solid state lithium ion secondary battery that is able to be charged and discharged in the air, enables stable driving, and is able to improve charge and discharge characteristics and repeated charge and discharge durability is able to be realized.

Further, even if the films composing the battery are formed from an amorphous film, since the films are formed on the inorganic insulating film provided on the substrate face, a high performance and inexpensive thin film solid state lithium ion secondary battery that is able to be charged and discharged in the air, enables stable driving, is able to improve durability, and is able to be manufactured stably at improved manufacturing yield is able to be realized.

A description will be hereinafter given in detail of the embodiments of the present invention with reference to the drawings.

In the embodiments described below, the anode active material film is not provided, and the anode-side current collector protective film is provided.

### <Embodiment (1)>

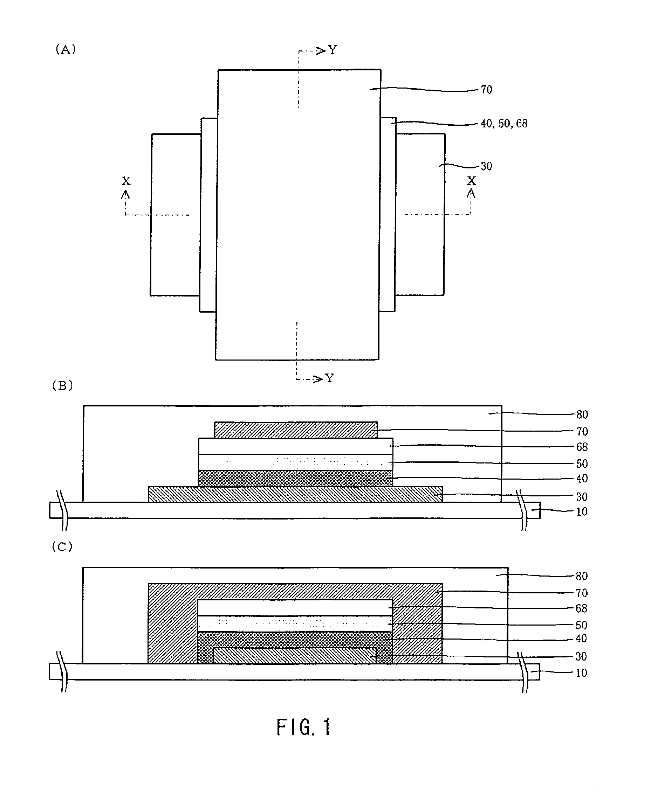

FIG. 1 is a view explaining a schematic structure of a solid state lithium ion battery in an embodiment of the present invention. FIG. 1 (A) is a plan view, FIG. 1 (B) is an X-X cross sectional view, and FIG. 1(C) is a Y-Y cross sectional view.

As illustrated in FIG. 1, the solid state lithium ion battery has a laminated body in which a cathode-side current collector film 30, a cathode active material film 40, a solid electrolyte film 50, an anode-side current collector protective film 68, and an anode-side current collector film 70 are sequentially formed on a substrate (organic insulating substrate) 10. An overall protective film 80 made of, for example, an ultraviolet curing resin is formed to wholly cover the laminated body.

The battery film structure illustrated in FIG. 1 is the substrate/the cathode-side current collector film/the cathode active material film/the solid electrolyte film/the anode-side current collector protective film/the anode-side current collector film/the overall protective film.

In addition, a structure in which a plurality of the foregoing laminated bodies are sequentially layered on the substrate (organic insulating substrate) 10, are electrically connected in series, and are covered by the overall protective film 80 may be employed. Further, a structure in which a plurality of the foregoing laminated bodies are arranged in line on the substrate (organic insulating substrate) 10, are electrically connected in parallel or in series, and are covered by the overall protective film 80 may be employed.

Further, the foregoing laminated body is able to be formed in the order of the anode-side current collector film 70, the anode-side current collector protective film 68, the solid electrolyte film 50, the cathode active material film 40, and the cathode-side current collector film 30 on the substrate (organic insulating substrate) 10. That is, the battery film structure is able to be the substrate/the anode-side current collector film/the anode-side current collector protective film /the solid electrolyte film/the cathode active material film/the cathode-side current collector film/the overall protective film.

### <Embodiment (2)>

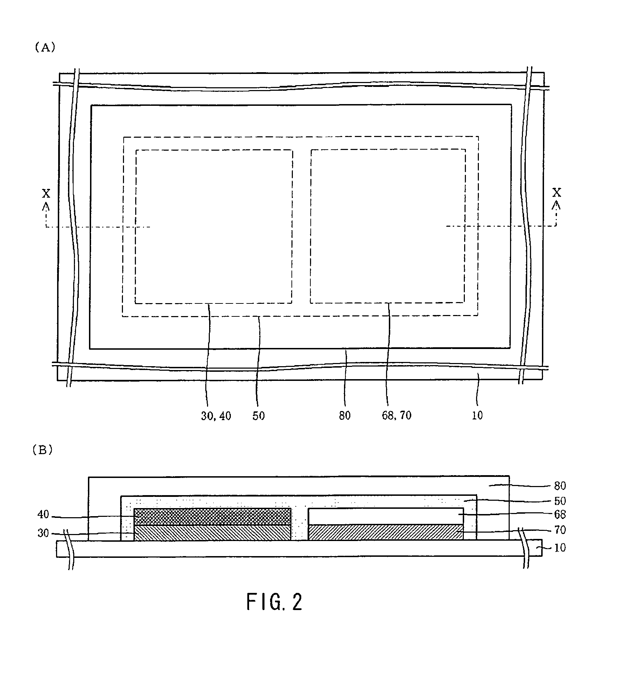

FIG. 2 is a view explaining a schematic structure of a solid state lithium ion battery in an embodiment of the present invention. FIG. 2(A) is a plan view and FIG. 2(B) is an X-X cross sectional view.

FIG. 2 is a view explaining a schematic structure of a solid state lithium ion battery in an embodiment (2) of the present invention. FIG. 2(A) is a plan view and FIG. 2(B) is an X-X cross sectional view.

As illustrated in FIG. 2, the solid state lithium ion battery has a laminated body composed of the cathode-side current collector film 30 and the cathode active material film 40 and a laminated body composed of the anode-side current collector film 70 and the anode-side current collector protective film 68 that are formed on the substrate (organic insulating substrate) 10. The solid electrolyte film 50 is formed to wholly cover the foregoing two laminated bodies arranged in line on the substrate (organic insulating substrate) 10, and the overall protective film 80 made of, for example, an ultraviolet curing resin is formed to wholly cover the solid electrolyte film 50.

In addition, a structure in which a plurality of sets of the foregoing two laminated bodies are arranged in line on the substrate (organic insulating substrate) 10, are electrically connected in parallel or in series, and are covered by the overall protective film 80 may be employed.

Next, a description will be given of a structure of a solid state lithium ion battery in which an inorganic insulating film 20 is provided between the substrate (organic insulating substrate) 10 and the cathode-side current collector film 30.

### <Embodiment (3)>

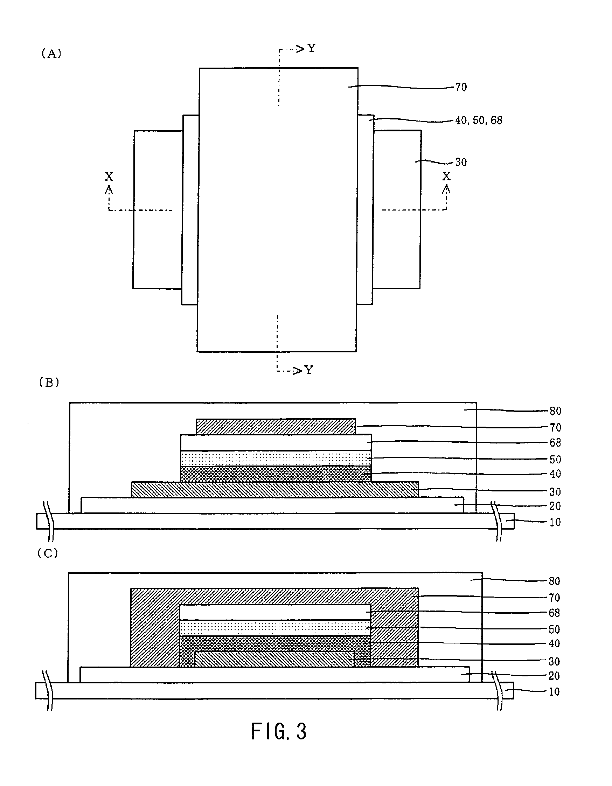

FIG. 3 is a view explaining a schematic structure of a solid state lithium ion battery in an embodiment of the present invention. FIG. 3(A) is a plan view, FIG. 3(B) is an X-X cross sectional view, and FIG. 3(C) is a Y-Y cross sectional view.

As illustrated in FIG. 3, the solid state lithium ion battery has the inorganic insulating film 20 formed on a face of the substrate (organic insulating substrate) 10. The solid state lithium ion battery has a laminated body in which the cathode-side current collector film 30, the cathode active material film 40, the solid electrolyte film 50, the anode-side current collector protective film 68, and the anode-side current collector film 70 are sequentially formed on the inorganic insulating film 20. The overall protective film 80 made of, for example, an ultraviolet curing resin is formed to wholly cover the laminated body and the inorganic insulating film 20.

The battery film structure illustrated in FIG. 3 is the substrate/the inorganic insulating film/the cathode-side current collector film/the cathode active material film/the solid electrolyte film/the anode-side current collector protective film/the anode-side current collector film/the overall protective film.

In addition, a structure in which a plurality of the foregoing laminated bodies are sequentially layered and formed on the inorganic insulating film 20, are electrically connected in series, and are covered by the overall protective film 80 nay be employed. Further, a structure in which a plurality of the foregoing laminated bodies are arranged in line on the inorganic insulating film 20, are electrically connected in parallel or in series, and are covered by the overall protective film 80 may be employed.

Further, the foregoing laminated body is able to be formed in the order of the anode-side current collector film 70, the anode-side current collector protective film 68, the solid electrolyte film 50, the cathode active material film 40, and the cathode-side current collector film 30 on the inorganic insulating film 20. That is, the battery film structure is able to be the substrate/the inorganic insulating film/the anode-side current collector film/the anode-side current collector protective film/the solid electrolyte film/the cathode active material film/the cathode-side current collector film/the overall protective film.

### <Embodiment (4)>

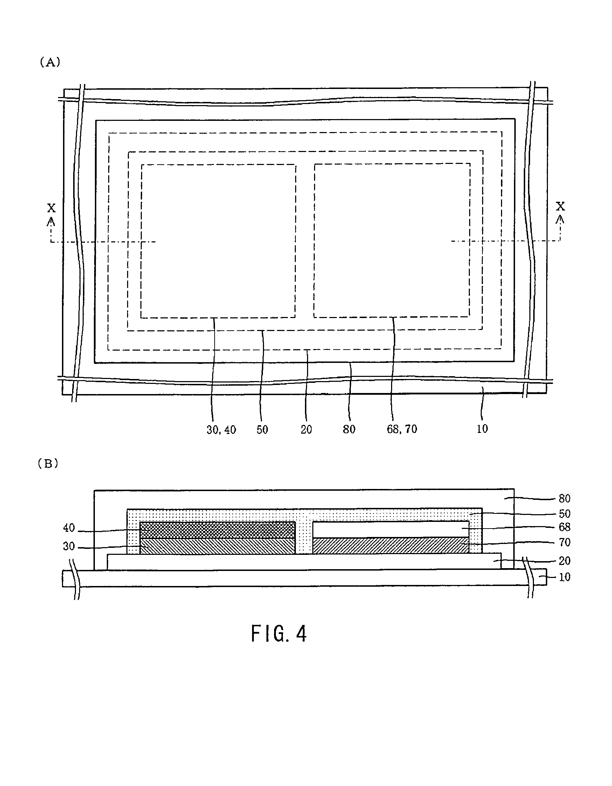

FIG. 4 is a view explaining a schematic structure of a solid state lithium ion battery in an embodiment of the present invention. FIG. 4(A) is a plan view and FIG. 4(B) is an X-X cross sectional view.

As illustrated in FIG. 4, the solid state lithium ion battery has the inorganic insulating film 20 formed on a face of the substrate (organic insulating substrate) 10. The solid state lithium ion battery has a laminated body composed of the cathode-side current collector film 30 and the cathode active material film 40 and a laminated body composed of the anode-side current collector film 70 and the anode-side current collector protective film 68 on the inorganic insulating film 20. The solid electrolyte film 50 is formed to wholly cover the foregoing two laminated bodies arranged in line on the inorganic insulating film 20, and the overall protective film 80 made of, for example, an ultraviolet curing resin is formed to wholly cover the solid electrolyte film 50.

In addition, a structure in which a plurality of sets of the foregoing two laminated bodies are arranged in line on the inorganic insulating film 20, are electrically connected in parallel or in series, and are covered by the overall protective film 80 may be employed.

### [Manufacturing process of the solid state lithium ion battery]

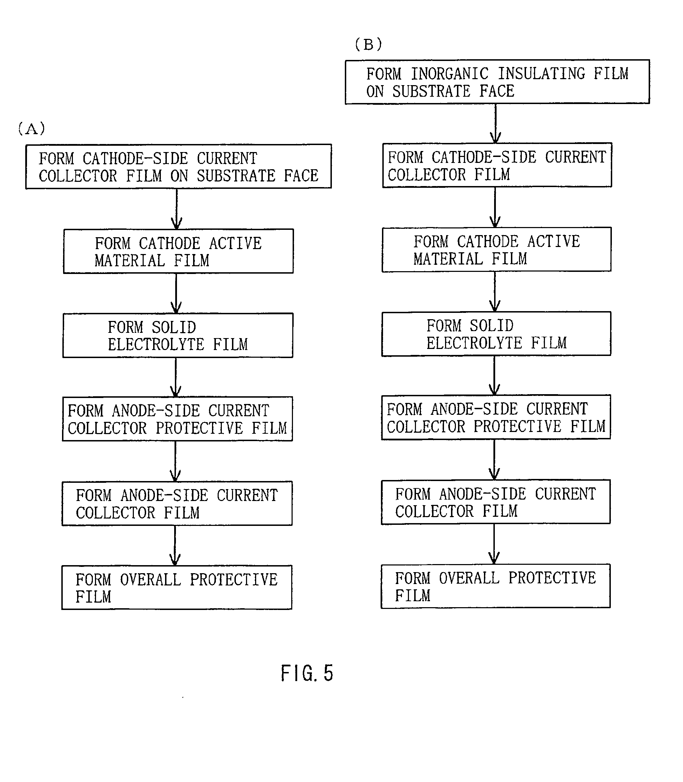

FIG. 5 is a diagram explaining short summary of manufacturing process of the solid state lithium ion battery in the embodiments of the present invention. FIG. 5(A) illustrates manufacturing process of the solid state lithium ion battery illustrated in FIG. 1, and FIG. 5(B) illustrates manufacturing process of the solid state lithium ion battery illustrated in FIG. 3.

As illustrated in FIG. 5(A), first, the laminated body is formed by sequentially forming the cathode-side current collector film 30, the cathode active material film 40, the solid electrolyte film 50, the anode-side current collector protective film 68, and the anode-side current collector film 70 on the substrate (organic insulating substrate) 10. Next, the overall protective film 80 made of, for example, an ultraviolet curing resin is formed on the substrate (organic insulating substrate) 10 to wholly cover the laminated body. Accordingly, the solid state lithium ion battery illustrated in FIG. 1 is able to be fabricated.

As illustrated in FIG. 5(B), first, the inorganic insulating film 20 is formed on the face of the substrate (organic insulating substrate) 10. Next, the laminated body is formed by sequentially forming the cathode-side current collector film 30, the cathode active material film 40, the solid electrolyte film 50, the anode-side current collector protective film 68, and the anode-side current collector film 70 on the inorganic insulating film 20. Finally, the overall protective film 80 made of, for example, an ultraviolet curing resin is formed on the substrate (organic insulating substrate) 10 to wholly cover the laminated body and the inorganic insulating film 20. Accordingly, the solid state lithium ion battery illustrated in FIG. 3 is able to be fabricated.

Though not illustrated, the manufacturing process of the solid state lithium ion battery illustrated in FIG. 2 are as follows. First, the laminated body structured by sequentially forming the cathode-side current collector film 30 and the cathode active material film 40 and the laminated body structured by sequentially forming the anode-side current collector film 70 and the anode-side current collector protective film 68 are respectively arranged in line on the substrate (organic insulating substrate) 10.

Next, the solid electrolyte film 50 is formed to wholly cover the foregoing two laminated bodies arranged in line on the substrate (organic insulating substrate) 10. Finally, the overall protective film 80 made of, for example, an ultraviolet curing resin is formed on the inorganic insulating film 20 to wholly cover the solid electrolyte film 50.

Moreover, though not illustrated, the manufacturing process of the solid state lithium ion battery illustrated in FIG. 4 are as follows. First, the inorganic insulating film 20 is formed on the face of the substrate (organic insulating substrate) 10. Next, the laminated body structured by sequentially forming the cathode-side current collector film 30 and the cathode active material film 40 and the laminated body structured by sequentially forming the anode-side current collector film 70 and the anode-side current collector protective film 68 are respectively arranged in line on the inorganic insulating film 20. Next, the solid electrolyte film 50 is formed to wholly cover the foregoing two laminated bodies arranged in line on the inorganic insulating film 20. Finally, the overall protective film 80 made of, for example, an ultraviolet curing resin is formed on the inorganic insulating film 20 to wholly cover the solid electrolyte film 50.

In the embodiments described above, as a material composing the solid state lithium ion battery, the following materials are able to be used.

As a material composing the solid electrolyte film 50, lithium phosphate (Li₃PO₄), Li₃PO₄Nₓ (generally called LiPON) obtained by adding nitrogen to lithium phosphate (Li₃PO₄), LiBO₂Nₓ, Li₄SiO₄-Li₃PO₄, Li₄SiO₄-Li₃VO₄ and the like are able to be used.

As a material composing the cathode active material film 40, a material that easily extracts and inserts lithium ions and that is able to make the cathode active material film extract and insert many lithium ions may be used. As such a material, LiMnO₂ (lithium manganese), a lithium-manganese oxide such as LiMn₂O₄ and Li₂Mn₂O₄, LiCoO₂ (lithium cobalt oxide), a lithium-cobalt oxide such as LiCo₂O₄, LiNiO₂ (lithium nickel oxide), a lithium-nickel oxide such as LiNi₂O₄,
a lithium-manganese-cobalt oxide such as LiMnCoO₄ and LhMnCoO₄, a lithium-titanium oxide such as Li₄Ti₅O₁₂ and LiTi₂O₄, LiFePO₄ (lithium iron phosphate), titanium sulfide (TiS₂), molybdenum sulfide (MoS₂), iron sulfide (FeS, FeS₂), copper sulfide (CuS), nickel sulfide (Ni₃S₂), bismuth oxide (Bi₂O₃), bismuth plumbate (Bi₂Pb₂O₅), copper oxide (CuO), vanadium oxide (V₆O₁₃), niobium selenide (NbSe₃) and the like are able to be used. Further, the foregoing materials are able to be used by mixture as well.

As a material composing the anode-side current collector protective film 68, a material that easily extracts and inserts lithium ions and that is able to make many lithium ions be extracted and inserted may be used. As such a material, an oxide of any of Sn, Si, Al, Ge, Sb, Ag, Ga, In, Fe, Co, Ni, Ti, Mn, Ca, Ba, La, Zr, Ce, Cu, Mg, Sr, Cr, Mo, Nb, V, Zn, and the like may be used. Further, the foregoing oxides are able to be used by mixture as well.

Specific examples of the material composing the anode-side current collector protective film 68 are silicon-manganese alloy (Si-Mn), silicon-cobalt alloy (Si-Co), silicon-nickel alloy (Si-Ni), niobium pentoxide (Nb₂O₅), vanadium pentoxide (V₂O₅), titanium oxide (TiO₂), indium oxide (In₂O₃), zinc oxide (ZnO), tin oxide (SnO₂), nickel oxide (NiO), Sn-added indium oxide (ITO), Al-added zinc oxide (AZO), Ga-added zinc oxide (GZO), Sn-added tin oxide (ATO), and F (fluorine)-added tin oxide (FTO). Further, the foregoing materials are able to be used by mixture as well.

As a material composing the cathode-side current collector film 30 and the anode-side current collector 70, Cu, Mg, Ti, Fe, Co, Ni, Zn, Al, Ge, In, Au, Pt, Ag, Pd and the like or an alloy containing any of the foregoing elements is able to be used.

As a material composing the inorganic insulating film 20, any material that is able to form a film having low moisture absorption characteristics and moisture resistance may be used. As such a material, a simple body of an oxide, a nitride, or a sulfide of Si, Cr, Zr, Al, Ta, Ti, Mn, Mg, and Zn, or a mixture thereof is able to be used. More specifically, Si₃N₄, SiO₂ Cr₂O₃, ZrO₂ Al₂O₃, TaO₂, TiO₂, Mn₂O₃, MgO, ZnS or the like or a mixture thereof is able to be used.

The solid electrolyte film 50, the cathode active material film 40, the anode-side current collector protective film 68, the cathode-side current collector film 30, the anode-side current collector 70, and the inorganic insulating film 20 described above are able to be respectively formed by a dry step such as sputtering method, electron beam evaporation method, and heat evaporation method.

As the organic insulating substrate 10, a polycarbonate (PC) resin substrate, a fluorine resin substrate, a polyethylene terephthalate (PET) substrate, a polybutylene terephthalate (PBT) substrate, a polyimide (PI) substrate, a polyamide (PA) substrate, a polysulfone (PSF) substrate, a polyether sulfone (PES) substrate, a polyphenylene sulfide (PPS) substrate, a polyether ether ketone (PEEK) substrate or the like is able to be used. Though a material of the substrate is not particularly limited, a substrate having low moisture absorption characteristics and moisture resistance is more preferable.

As a material composing the overall protective film 80, any material having low moisture absorption characteristics and moisture resistance may be used. As such a material, an acryl ultraviolet curing resin, an epoxy ultraviolet curing resin or the like is able to be used. The overall protective film is able to be formed by evaporating a parylene resin film.

### <Examples and Comparative examples>

### [Structures in Examples and Comparative examples]

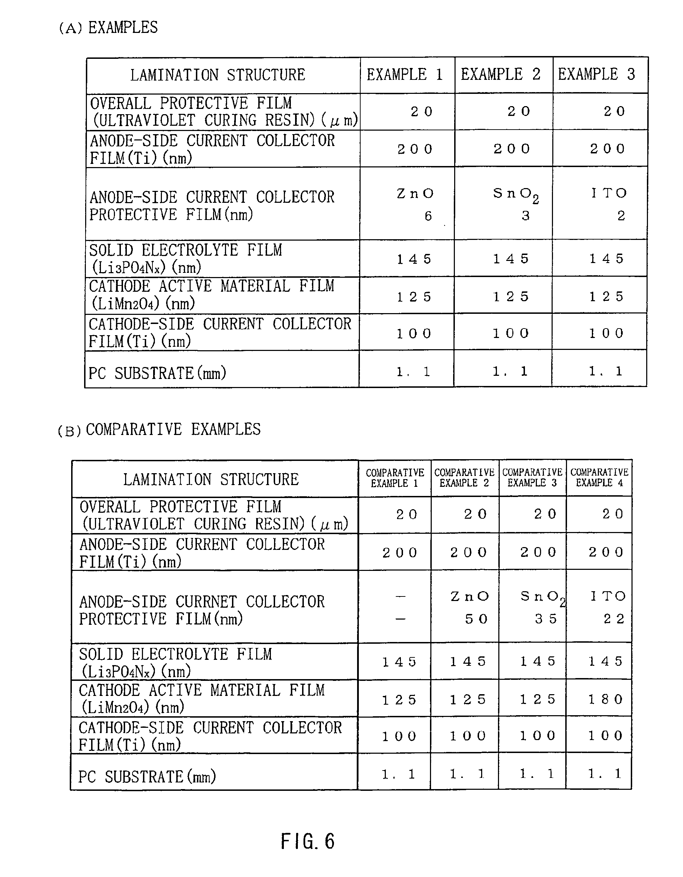

FIG. 6 is a diagram explaining structures of respective layers of solid state lithium ion batteries in Examples and Comparative examples of the present invention.

### [Example 1]

A solid state lithium ion battery having the structure illustrated in FIG. 1 was formed. Taking mass productivity and cost into consideration, a polycarbonate (PC) substrate having a thickness of 1.1 mm was used as the substrate 10. Alternately, a substrate made of a glass material, acryl or the like is able to be used. Any substrate which has no electric conductivity and in which its surface is sufficiently flat according to the film thickness of the formed battery may be used. As the inorganic insulating film 20, a Si₃N₄ film having a thickness of 200 nm was formed on the whole area of the substrate 10.

As illustrated in FIG. 1, the laminated body was formed by sequentially forming the cathode-side current collector film 30, the cathode active material film 40, the solid electrolyte film 50, the anode-side current collector protective film 68, and the anode-side current collector film 70 on the inorganic insulating film 20 with the use of a metal mask. However, the lamination order may be opposite of the foregoing order, that is, the laminated body is able to be formed by sequentially layering the anode-side current collector film 70, the anode-side current collector protective film 68, the solid electrolyte film 50, the cathode active material film 40, and the cathode-side current collector film 30 on the inorganic insulating film 20.

As the metal mask, a stainless mask having a size of 500 µm was used. Alternately, a pattern is able to be formed by using lithography technology. In any case, the all films composing the foregoing laminated body are formed on the inorganic insulating film.

As the cathode-side current collector film 30 and the anode-side current collector film 70, Ti was used, and the film thickness thereof was 100 nm or 200 nm. For the cathode-side current collector film 30 and the anode-side current collector film 70, other material is able to be similarly used as long as such a material has electric conductivity and superior durability. Specifically, a metal material containing Au, Pt, Cu or the like or an alloy thereof is used. The metal material may contain an additive in order to improve durability and electric conductivity.

As the cathode active material film 40, LiMn₂O₄ was used, and the film thickness thereof was 125 nm. The film formation method of the cathode active material film 40 was sputtering method. Since the cathode active material film 40 was formed under the condition that temperature of the substrate 10 was room temperature and post annealing was not performed, the cathode active material film 40 was in amorphous state. With the use of XRD (Shimazu XRD-6000), it was found that the peak of LiMn₂O₄ was not shown, and crystallization was not shown. In addition, in observation by using TEM, it was found that there was possibility that micro-crystallization was made.

Example 1 did not depend on the state of the cathode active material film 40. It is needless to say that even if crystallization is made, characteristics similar to or more than those of Example 1 are able to be obtained, and effect of the present invention are able to be obtained similarly in the case of using other material. The cathode active material film 40 is able to be formed from other material. A well-known material such as LiCoO₂, LiFePO₄, and LiNiO₂ is able to be used.

For the film thickness of the cathode active material film 40, there is no specific point to be described, except that a larger film thickness provided a higher battery capacity. The capacity in Example 1 was 7 µAh/cm² which was a sufficient amount to provide effect of the present invention. According to the application and the purpose, the film thickness of the cathode active material film 40 is able to be adjusted.

It is needless to say that in Example 1, if the cathode active material film 40 is annealed, more favorable characteristics are obtained.

As the solid electrolyte film 50, Li₃PO₄Nₓ was used. Since the solid electrolyte film 50 was formed under the condition that temperature of the substrate 10 in sputtering was room temperature and post annealing was not performed, the formed solid electrolyte film 50 was in amorphous state. For composition x of nitrogen in the formed solid electrolyte film 50, the accurate numerical value is unknown due to reactive sputtering of nitrogen in sputtering gas. However, the composition x of nitrogen in the formed solid electrolyte film 50 may be a value similar to that of Non-patent document 1.

In Example 1, it is apparent that similar effect is able to be obtained even if other solid electrolyte film material is used. A known material such as LiBO₂Nₓ, Li₄SiO₄-Li₃PO₄, and Li₄SiO₄-Li₃VO₄ is able to be used.

Regarding the film thickness of the solid electrolyte film 50, it is necessary to obtain sufficient insulation properties. Thus, in the case where the film thickness of the solid electrolyte film 50 is excessively small, there is a possibility that short circuit is generated in the initial stage or in the course of charge and discharge. Therefore, for example, the film thickness of the solid electrolyte film 50 is preferably 50 nm or more. However, the film thickness of the solid electrolyte film 50 depends not only on the film thickness and the film quality of the cathode, but also on the substrate, the current collector material, the film formation method, and the charge and discharge rate. Thus, in terms of durability, in some cases, the film thickness of the solid electrolyte film 50 is preferably larger than the foregoing value.

On the contrary, if the film thickness of the solid electrolyte film 50 is excessively large, for example, in the case where the film thickness of the solid electrolyte film 50 is 500 nm or more, since the ionic conductivity of the solid electrolyte film 50 is often lower than that of a liquid electrolyte, a problem occurs in charge and discharge. Further, in the case where the solid electrolyte film 50 is formed by sputtering, if the film thickness is excessively large, sputtering time becomes longer, takt time becomes longer, and a sputtering chamber should be multi-channelized. It leads to large business investment, which is not preferable.

Thus, the film thickness of the solid electrolyte film 50 should be set to an appropriate value by taking the foregoing conditions into consideration. However, the film thickness itself is not related to the effect of the present invention. In this case, the film thickness of the solid electrolyte film 50 was 145 nm.

The use of a transparent conductive film for the anode-side current collector protective film 68 is a characteristic in Example 1, and ZnO having a film thickness of 6 nm was used.

As the anode-side current collector film 70 and the cathode-side current collector film 30, Ti was used, and the film thickness was 200 nm.

Finally, the overall protective film 80 was formed by using an ultraviolet curing resin. The overall protective film 80 functions as a protective film to moisture intrusion from the opposite side face of the substrate 10. That is, it was confirmed that intrusion of harmful matter such as water and oxygen was prevented and electric short circuit was less likely to be generated by appropriately covering the surface of the battery with the overall protective film 80 according to expansion and shrinkage due to charge and discharge.

Further, for a sample in which the overall protective film 80 was not formed, many foam-like defects 100 µm or more in size were generated on the surface within about 1 week, short circuit was generated, and function as a battery was disabled. Thus, the overall protective film 80 functioned as a protective film. Further, concurrently, the overall protective film 80 protected from a scratch in handling.

As the ultraviolet curing resin used for forming the overall protective film 80, an ultraviolet curing resin under model number SK3200 made by Sony Chemical & Information Device Corporation was used. For example, other ultraviolet curing resin under model number SK5110 or the like made by Sony Chemical & Information Device Corporation is also able to be used, and similar effect is expectable. As a material used for forming the overall protective film, in particular, a material having high water resistant protective effect is preferable.

It is to be noted that part of the ultraviolet curing resin covering the cathode-side current collector 30 and the anode-side current collector 70 was peeled, only the Ti metal face of the current collectors 30 and 70 was the exposed section, and such a section was used as an electrode connection terminal to avoid influence on battery durability.

In summary, the battery film structure was the polycarbonate substrate/Si₃N₄ (200 nm)/Ti (100 nm)/LiMn₂O₄ (125 nm)/Li₃PO₄Nₓ (145 nm)/ZnO (6 nm)/Ti (200 nm)/ultraviolet curing resin (20 µm) (refer to FIG. 6(A)).

In this case, the foregoing respective films composing the battery were formed by sputtering. However, a method such as evaporation, plating, and spray coating is able to be used as long as a battery thin film having similar film quality is able to be formed.

A description will be hereinafter given of the film formation by sputtering method in detail.

In forming the Ti film, the LiMn₂O₄ film, and the Li₃PO₄Nₓ film, SMO-01 special model made by ULVAC Inc., was used. The target size was 4 inches in diameter. The sputtering conditions of the respective layers were as follows.

### (1) Formation of the Ti film

Sputtering gas: Ar 70 sccm, 0.45 Pa
Sputtering power: 1000 W (DC)

### (2) Formation of the LlMn₂O₄ film

Sputtering gas: (Ar 80%+O₂ 20% mixed gas) 20 sccm, 0.20 Pa
Sputtering power: 300 W (RF)

### (3) Formation of the Li₃PO₄Nₓ film

Target composition: Li₃PO₄
Sputtering gas: Ar 20 sccm+N₂ 20 sccm, 0.26 Pa
Sputtering power: 300 W (RF)
Note that sputtering time was adjusted so that a desired film thickness was obtained.

In forming the ZnO film, C-3103 made by ULVAC was used. The target size was 6 inches in diameter. The sputtering conditions were as follows.
Target composition: ZnO
Sputtering gas: Ar 150 sccm, 0.10 Pa
Sputtering power: 1500 W (DC)
Note that sputtering time was adjusted so that a desired film thickness was obtained.

Charge and discharge curve was measured by using Keithley 2400, and the charge and discharge rate was 1C in all cases (current value corresponding to completing charge and discharge in 1 hour). The charge and discharge current value in Example 1 was 8 µA.

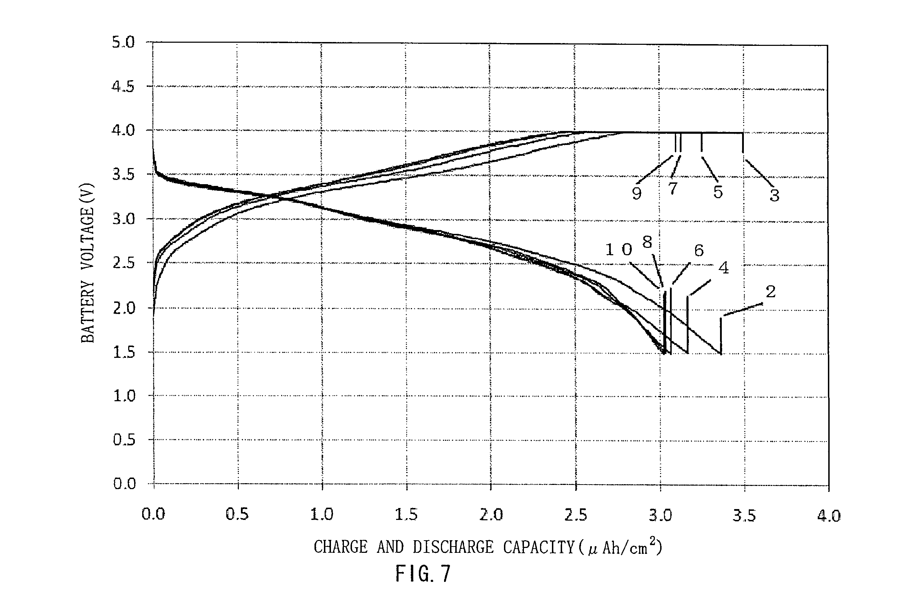

FIG. 7 is a diagram illustrating charge and discharge curves in Example 1 of the present invention. The horizontal axis indicates a charge and discharge capacity (µAh/cm²), and the vertical axis indicates a battery voltage (V).

In FIG. 7, even numbers n=2, 4, and so on affixed to charge and discharge curves indicate discharge, and odd numbers n=3, 5, and so on indicate charge. For example, n=2 indicates the first discharge curve after the initial charge, and n=3 indicates the charge curve after the first discharge. That is, even number n=K indicates k=(K/2)th discharge after the initial charge (n=1) where k is 1, 2 and so on, and odd number n=M indicates m=((M+1)/2)th charge curve where m is 2, 3 and so on.

The results illustrated in FIG. 7 show that charge and discharge in repeated charge and discharge were very favorably performed. Since the material composing the cathode active material film was not crystallized, obtained battery voltages were slightly lower than in general Li ion batteries as a whole, while drive was enabled in the range of 2.5 V or more. This indicates that battery characteristics of a practical level are able to be obtained without crystallization. It is needless to say that, if the cathode active material film is annealed using the structure in Example 1, more favorable characteristics are obtained.

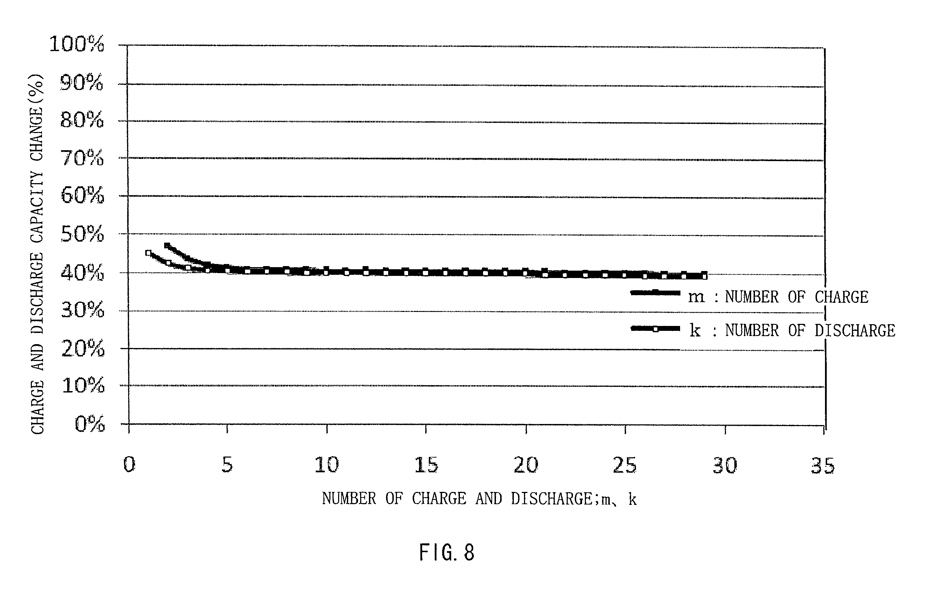

FIG. 8 is a diagram illustrating charge and discharge cycle characteristics in Example 1 of the present invention.

In FIG. 8, horizontal axes k and m indicate k th (k=1, 2 and so on) discharge corresponding to an even number n affixed to the charge and discharge curves illustrated in FIG. 7 and m th (m=2, 3 and so on) charge corresponding to an odd number n. The vertical axis indicates a relative value (%) of a charge and discharge capacity to a capacity (100%) in the charge and discharge capacity change (initial charge (n=1)).

FIG. 8 illustrates experiment result of charge and discharge repeated about 40 cycles. It is shown that deterioration of battery performance was significantly little in the experiment range, and favorable repeated charge and discharge characteristics were obtained. That is, it was shown that the thin film Li battery having the structure according to Example 1 had both favorable discharge voltage characteristics and favorable repeated charge and discharge characteristics.

### [Comparative example 1]

A description will be given of Comparative example 1 formed by a film formation method similar to that of Example 1 without using the anode-side current collector protective film 68. The film structure of the battery in Comparative example 1 was totally the same as that of Example 1, except that the anode-side current collector protective film 68 was not formed. The film structure of the battery in Comparative example 1 was the polycarbonate substrate/Si₃N₄ (200 nm)/Ti (100 nm)/LiMn₂O₄ (125 nm)/Li₃PO₄Nₓ (145 nm)/Ti (200 nm)/ultraviolet curing resin (20 µm) (refer to FIG. 6(B)).

The film structure of the battery was a film structure of a battery simply without an anode active material film, and was basically similar to that of Non-patent document 2. Other films composing the battery were formed in a similar manner as that of Example 1, and measurement conditions of battery characteristics were similar to those of Example 1.

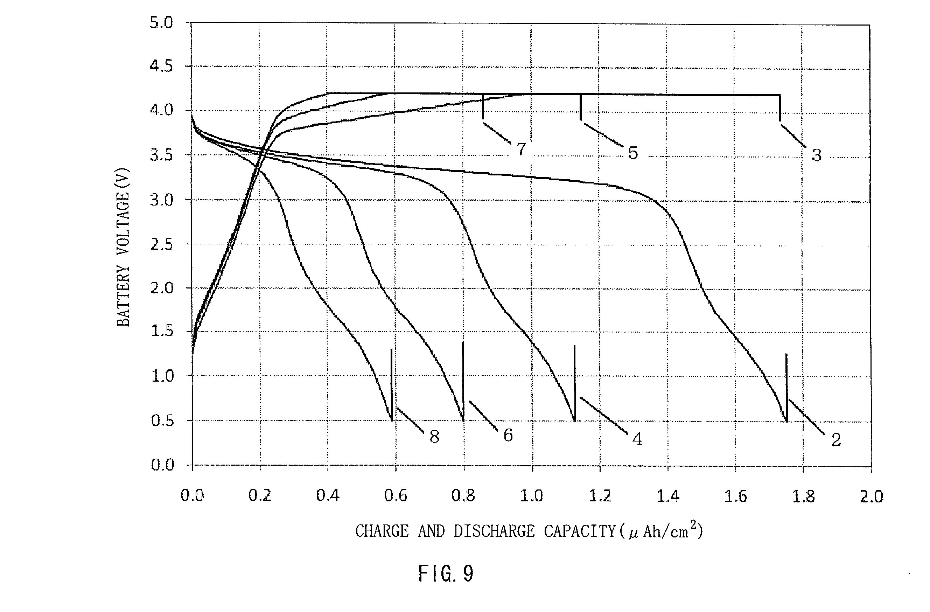

FIG. 9 is a diagram illustrating charge and discharge curves in Comparative example 1 of the present invention. The horizontal axis and the vertical axis indicate the same as those illustrated in FIG. 7. Meanings indicated by even numbers and odd numbers n affixed to the charge and discharge curves are the same as those of FIG. 7.

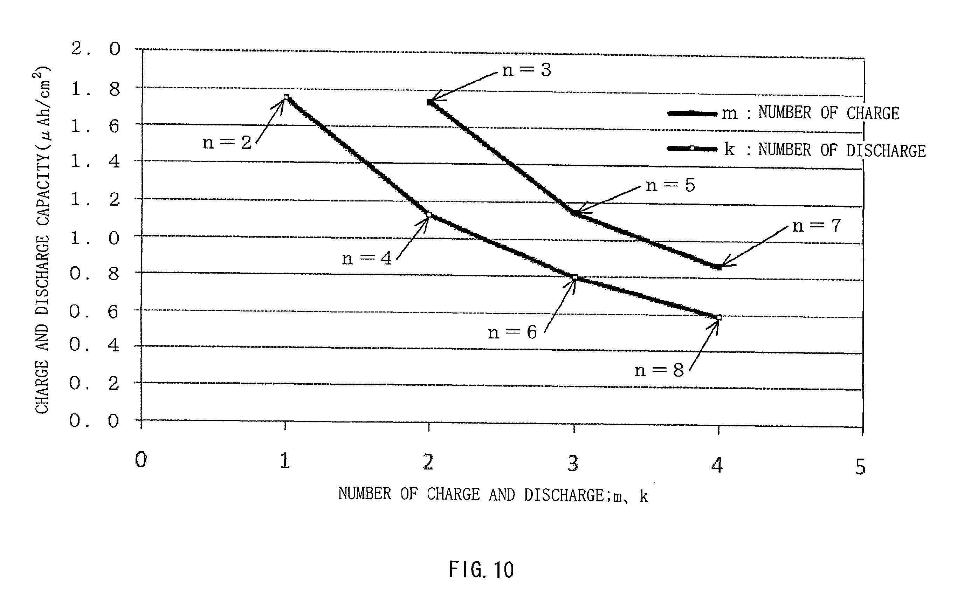

FIG. 10 is a diagram illustrating charge and discharge cycle characteristics in Comparative example 1 of the present invention. The horizontal axis in FIG. 10 is the same as that illustrated in FIG. 8, and the vertical axis in FIG. 10 indicates the charge and discharge capacity (µAh/cm²) illustrated in FIG. 9.

Comparing to the charge and discharge curves in Example 1 illustrated in FIG. 7, it was evident that deterioration was significantly fast in the charge and discharge curves illustrated in FIG. 9. FIG. 9 and FIG. 10 illustrate up to 4th discharge. Within such a range, the battery capacity was drastically lowered (refer to FIG. 10). It is evident that such behavior was generated since the anode-side current collector protective film 68 was not formed between the Ti electrode (anode-side current collector film 70) and the solid state electrolyte film 50. From comparison between Example 1 and Comparative example 1, it was evident that the anode-side current collector protective film 68 of the present invention was significantly effective.

In addition, in the case where a metal material other than Ti was used as the anode-side current collector film 70, deterioration was similarly observed more or less for the following supposed reason. That is, in charging, Li was diffused in the metal film (anode-side current collector film 70), and the diffused Li was not returned to the previous state at the time of discharge. The conductive oxide film (anode-side current collector protective film 68) used in the present invention had conductivity, diffusion of Li to the anode-side current collector film 70 was kept to the minimum, and thereby battery characteristics were favorably retained. Further, the present invention is characterized by contribution to formation of the Li-excessive layer since the film thickness of the anode-side current collector protective film 68 is small, and the anode-side current collector protective film 68 itself does not function as an anode.

In addition , in Comparative example 1, in forming the battery samples, 10 samples were concurrently provided with film forming. However, the charge and discharge curve illustrated in FIG. 9 was obtained in only one sample. Short circuit was generated at the time of initial charge in the other samples, resulting in defectives as a battery. That is, in the case where batteries having the structure as Comparative example 1 were formed, yield was significantly low. Meanwhile, in batteries having the structure as illustrated in Example 1, yield was approximately 100%, resulting in high productivity and significantly high stability.

### [Comparative example 2]

A description will be given of the case where the film thickness of the anode-side current collector protective film 68 is large, that is, of the case where the anode-side current collector protective film 68 functions as the anode active material as Comparative example 2. In Comparative example 2, ZnO was used as the anode-side current collector protective film 68 in the same manner as that in Example 1, and all was similar to Example 1 except that the film thickness of the anode-side current collector protective film 68 was 50 nm

The film structure of the battery in Comparative example 2 was the polycarbonate substrate/Si₃N₄ (200 nm)/Ti (100 nm)/LiMn₂O₄ (125 nm)/Li₃PO₄Nₓ (145 nm)/ZnO (50 nm)/Ti (200 nm)/ultraviolet curing resin (20 µm) (refer to FIG. 6(B)). Other films composing the battery were formed in a similar manner as that of Example 1, and measurement conditions of battery characteristics were similar to those of Example 1.

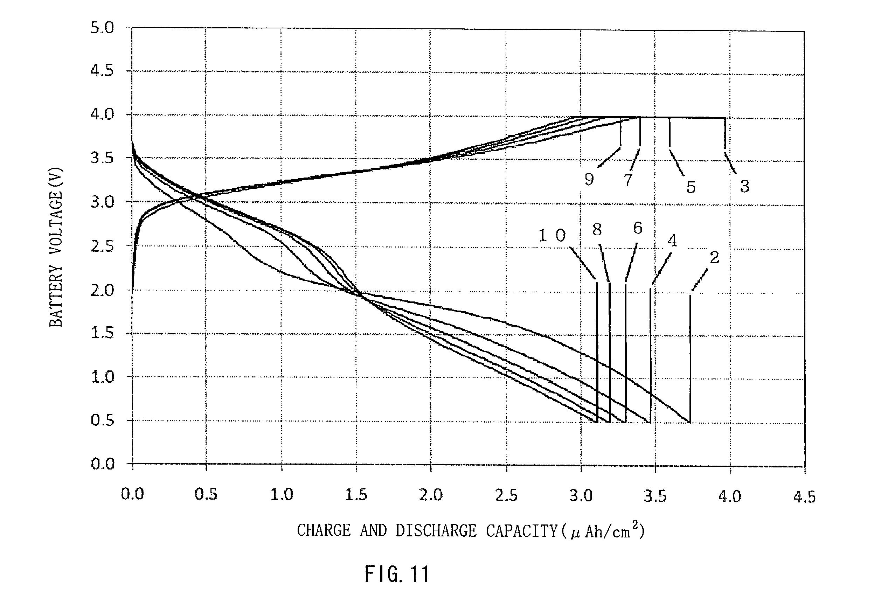

FIG. 11 is a diagram illustrating charge and discharge curves in Comparative example 2 of the present invention. The horizontal axis and the vertical axis indicate the same as those illustrated in FIG. 7. Meanings indicated by even numbers and odd numbers n affixed to the charge and discharge curves are the same as those of FIG. 7.

It is first evident from the charge and discharge curves illustrated in FIG. 11 that the behavior of battery voltage is poor. That is, the battery voltage has decreased to 1 V or below at the final stage of discharge. The poor behavior was generated from change in potential depending on the Li content, as a result of ZnO used as the anode-side current collector protective film 68 not being crystallized and not being in a favorable state as the anode-side current collector protective film 68. Usability as a battery is very poor and is impractical.

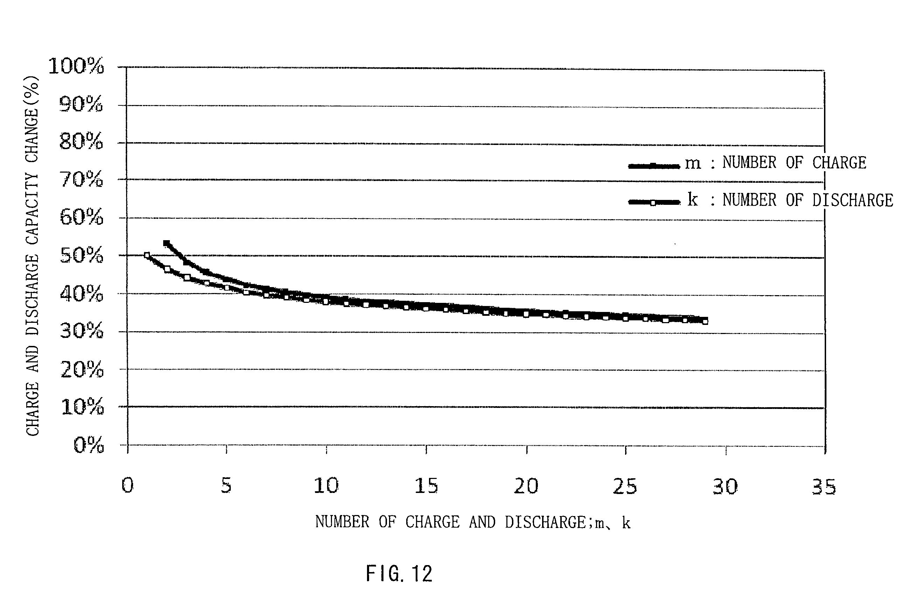

FIG. 12 is a diagram illustrating charge and discharge cycle characteristics in Comparative example 2 of the present invention. Note that the horizontal axis and the vertical axis are the same as those illustrated in FIG. 8.

Though the repeated charge and discharge characteristics illustrated in FIG. 12 are not especially poor compared to a general bulk Li ion battery, it is evident that the characteristics are poor compared to the repeated charge and discharge characteristics of the battery in Example 1 (refer to FIG. 8). That is, in Comparative example 2, the degree of decrease in battery capacity by repeated charge and discharge of about 40 times is large.

In this way, as is evidenced from the comparison between Example 1 and Comparative example 2, characteristics of the Li thin film battery were drastically improved by the present invention that uses the conductive oxide film not as the anode active material, but as the anode-side current collector protective film 68 in a very thin state.

### [Example 2]

A description will be given of an example that SnO₂ was used as the anode-side current collector protective film 68, and the film thickness of the anode-side current collector protective film 68 was 3 nm.

In forming the SnO₂ film, C-3103 made by ANELVA Corporation was used. The target size was 6 inches in diameter. The sputtering conditions were as follows.
Target composition: SnO₂
Sputtering gas: Ar 50 sccm+(Ar 80%+O₂ 20% mixed gas) 20 sccm, 0.10 Pa
Sputtering power: 1000 W (DC)
Other films composing the battery were formed in a similar manner as that of Example 1, and measurement conditions of battery characteristics were similar to those of Example 1. The battery film structure in Example 2 was the polycarbonate substrate/Si₃N₄ (200 nm)/Ti (100 nm)/LiMn₂O₄ (125 nm)/Li₃PO₄Nₓ (145 nm)/SnO₂ (3 nm)/Ti (200 nm)/ultraviolet curing resin (20 µm) (refer to FIG. 6(A)).

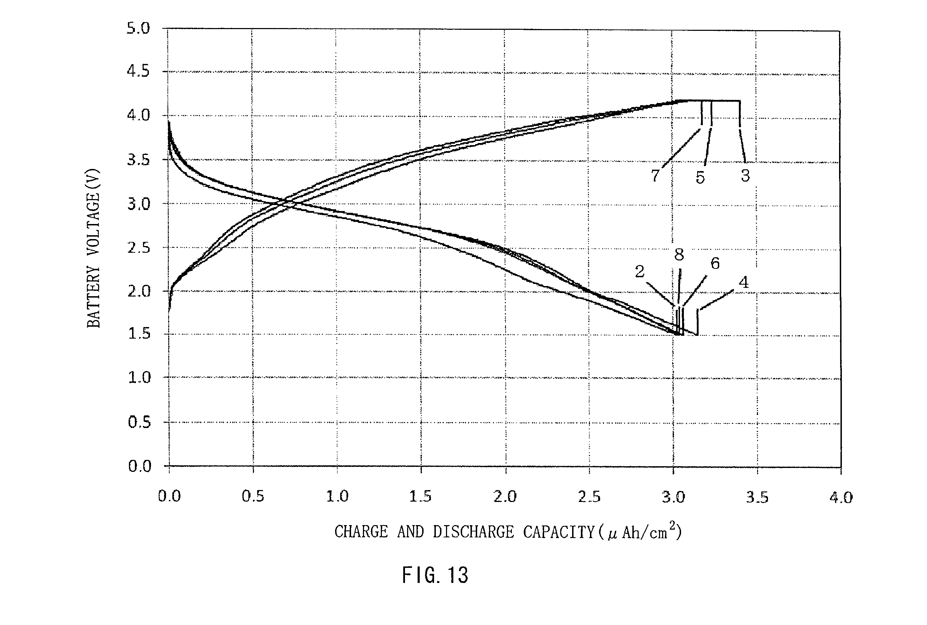

FIG. 13 is a diagram illustrating charge and discharge curves in Example 2 of the present invention. The horizontal axis and the vertical axis indicate the same as those illustrated in FIG. 7. Meanings indicated by even numbers and odd numbers n affixed to the charge and discharge curves are the same as those of FIG. 7.

As illustrated by the charge and discharge curves in FIG. 13, the repeated charge and discharge characteristics were favorable, and compared to the battery voltage in Example 1 (refer to FIG. 7), the battery voltage was slightly decreased but at a practical level. It was shown that the thin anode-side current collector protective film 68 such as SnO₂ having a film thickness of 3 nm functioned effectively.

In addition, a battery in which the film thickness of SnO₂ was further decreased to 2 nm was formed (battery film structure was the polycarbonate substrate/Si₃N₄ (200 nm)/Ti (100 nm)/LiMn₂O₄ (125 nm)/Li₃PO₄Nₓ (145 nm)/SnO₂ (2 nm)/Ti (200 nm)/ultraviolet curing resin (20 µm)). However, of 10 samples formed, short circuit was generated at the time of initial charge in half, resulting in defectives as a battery.

A result indicated by Example 2 and Comparative example 1 shows that yield was low with the anode-side current collector protective film 68 having a film thickness of less than 2 nm, and thus impractical. That is, the film thickness of the anode-side current collector protective film 68 of the present invention is preferably 2 nm or more. Further, the film thickness of the anode-side current collector protective film 68 is more preferably 3 nm or more as in Example 2.

### [Comparative Example 3]

A description will be given of Comparative example 3 in which the film thickness of SnO₂ that is the anode-side current collector protective film 68 in Example 2 was 35 nm. The battery film structure was the polycarbonate substrate/Si₃N₄ (200 nm)/Ti (100 nm)/LiMn₂O₄ (125 nm)/Li₃PO₄Nₓ (145 nm)/SnO₂ (35 nm)/Ti (200 nm)/ultraviolet curing resin (20 µm) (refer to FIG. 6(B)).

Other films composing the battery were formed in a similar manner as that of Example 2, and measurement conditions of battery characteristics were similar to those of Example 1.

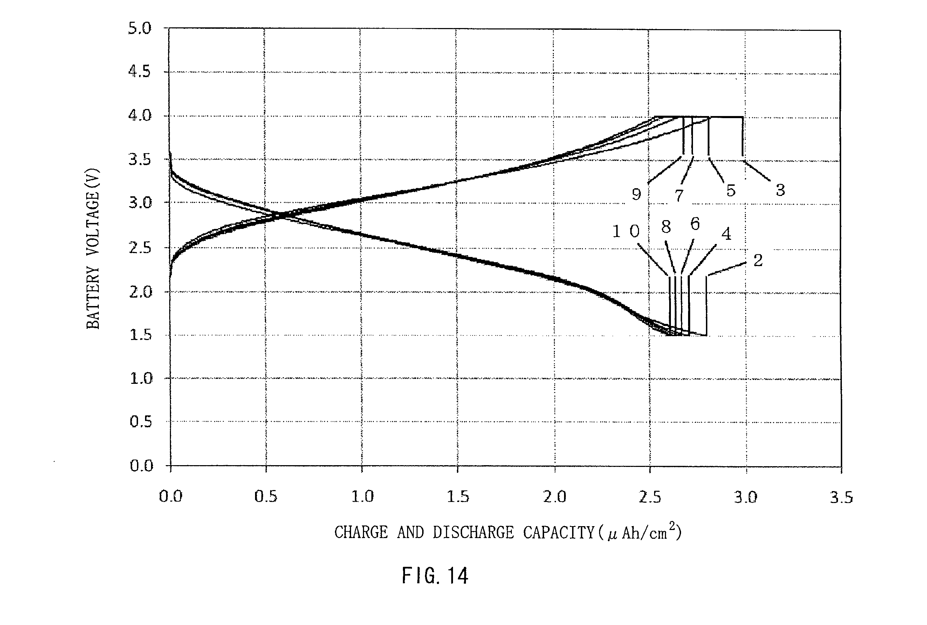

FIG. 14 is a diagram illustrating charge and discharge curves in Comparative example 3 of the present invention. The horizontal axis and the vertical axis indicate the same as those illustrated in FIG. 7. Meanings indicated by even numbers and odd numbers n affixed to the charge and discharge curves are the same as those of FIG. 7.

With the film thickness (SnO₂ 35 nm) of the anode-side current collector protective film 68 used in Comparative example 3, the SnO₂ functions as the anode active material over the entire charge and discharge region. As a result, as illustrated in FIG. 14, in comparison with the charge and discharge curves in Comparative example 2 (refer to FIG. 11) in which ZnO is the anode active material, the charge and discharge characteristics were favorable, and the shape of the charge and discharge curves itself was similar to that of Example 2 (refer to FIG. 13). However, the repeated charge and discharge characteristics were poor, and it is found that the characteristics were deteriorating even within the range illustrated in FIG. 14. It is evident that the characteristics were deteriorating from comparison of capacity at the discharge completion with that of Example 2 (refer to FIG. 13).

Thus, even in the case where the anode active material is optimized and relatively favorable characteristics are obtained, as a result of the anode-side current collector protective film 68 of the present invention being formed in place of the anode active material, a battery having durability that is far more favorable than that of the anode active material and a high voltage at the time of charge and discharge is able to be obtained.

### [Example 3]

A description will be given of an example in which ITO (ITO is In₂O₃ to which SnO₂ has been added, and is widely known as a transparent conductor film having particularly high conductivity) as the anode-side current collector protective film 68. The film thickness of ITO is 2 nm.

In forming the ITO film, C-3103 made by ANELVA Corporation was used. The target size was 6 inches in diameter. The sputtering conditions were as follows.
Target composition: ITO (In₂O₃ 90 wt.%+SnO₂ 10 wt.%)
Sputtering gas: Ar 120 sccm+(Ar 80%+O₂ 20% mixed gas) 30 sccm, 0.10 Pa
Sputtering power: 1000 W (DC)
Other films composing the battery were formed in a similar manner as that of Example 1, and measurement conditions of battery characteristics were similar to those of Example 1. The film structure of the battery in Example 3 was the polycarbonate substrate/Si₃N₄ (200 nm)/Ti (100 nm)/LiMn₂O₄ (125 nm)/Li₃PO₄Nₓ (145 nm)/ITO (2 nm)/Ti (200 nm)/ultraviolet curing resin (20 µm) (refer to FIG. 6(A)).

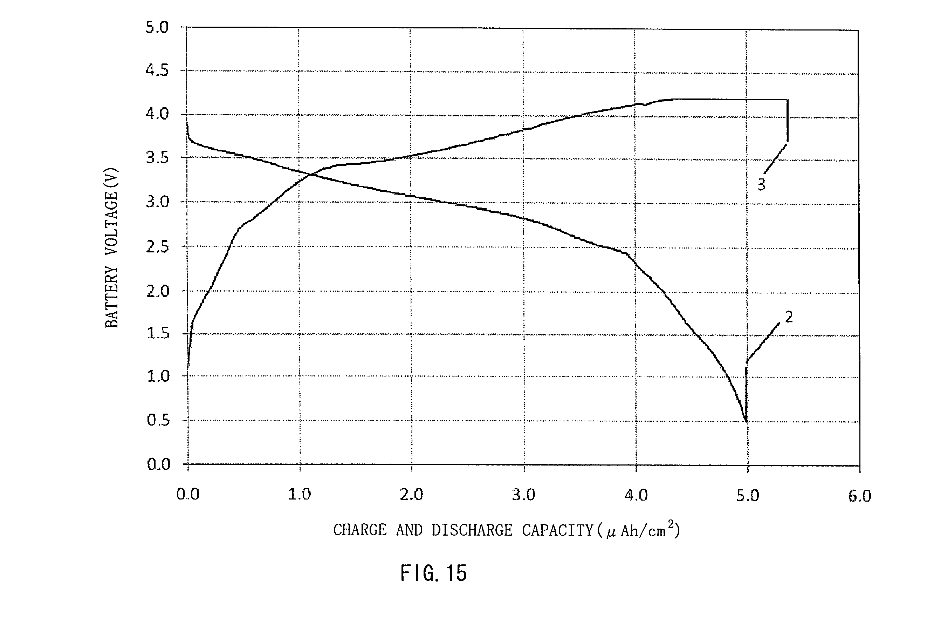

FIG. 15 is a diagram illustrating charge and discharge curves in Example 3 of the present invention. The horizontal axis and the vertical axis indicate the same as those illustrated in FIG. 7. Meanings indicated by even numbers and odd numbers n affixed to the charge and discharge curves are the same as those of FIG. 7.

Fig. 15 illustrates results related to the battery in which the film thickness of ITO is 2 nm. The results were almost equally favorable as those of Example 1 illustrated in FIG. 7, and the repeated charge and discharge characteristics were favorable.

### [Comparative Example 4]

A description will be given of Comparative example 4 in which the film thickness of ITO that is the anode-side current collector protective film 68 in Example 3 was 22 nm. The film thickness of LiMn₂O₄ in this case was 180 nm. The battery film structure was the polycarbonate substrate/Si₃N₄ (200 nm)/Ti (100 nm)/LiMn₂O₄ (180 nm)/L1₃PO₄Nₓ (145 nm)/ITO (22 nm)/Ti (200 nm)/ultraviolet curing resin (20 µm) (refer to FIG. 6(B)).

If ITO is considered to be the anode active material, the Li-content theoretical capacity at the foregoing film thickness was about 11 µAh/cm², and was almost the same value as the Li-content theoretical capacity of LiMn₂O₄ that is the cathode active material.

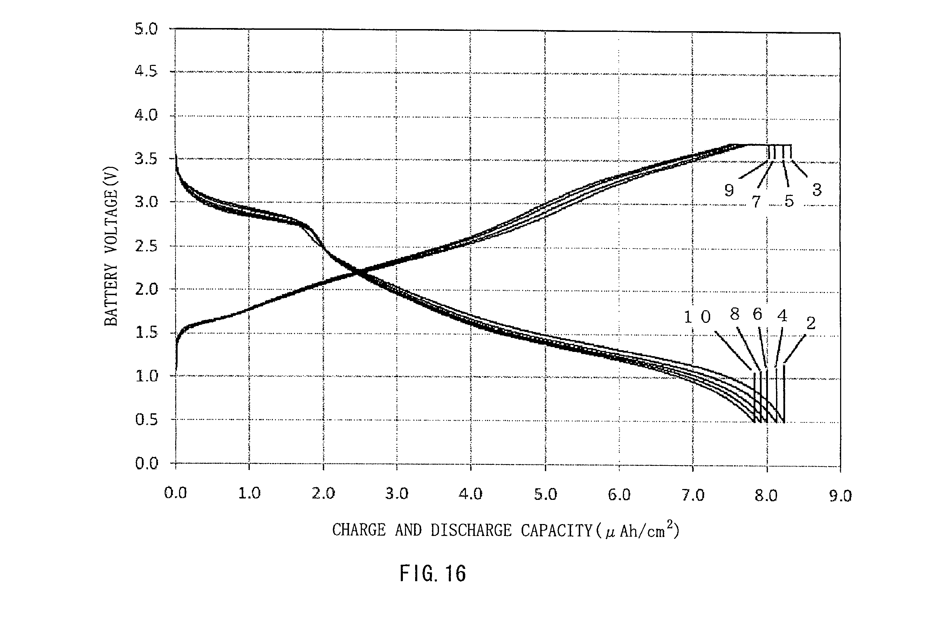

FIG. 16 is a diagram illustrating charge and discharge curves in Comparative example 4 of the present invention. The horizontal axis and the vertical axis indicate the same as those illustrated in FIG. 7. Meanings indicated by even numbers and odd numbers n affixed to the charge and discharge curves are the same as those of FIG. 7.

In the discharge curve illustrated in FIG. 16, a point at which an angle suddenly changes was present near (1.8 to 2) µAh/cm². An apparent step appeared at 1.8 µAh/cm², and showed that the Li-excessive layer and ITO each function as the anode active material. The Li-excessive layer functioned as the anode active material from the start of discharge to this point, and in a region from the step to 8 µAh/cm², the voltage gradually decreased. The region from the step to 8 µAh/cm² is considered to be an area (region) where the ITO functioned as the anode active material, and all Li were inserted into the ITO film and consumed. In addition, a conclusion is able to be made as such since the charge and discharge curves were the same as that in the case where ITO is even thicker.

Moreover, transition was made at high voltage from the start of discharge to 1.8 µAh/cm², and it is considered to be the same principle as those of Example 1, Example 2, and Example 3. That is, it is considered to be a region where discharge is generated by the Li-excessive layer formed on the anode side interface of the solid electrolyte film 50 (in other words, an area in the charge and discharge curves in which the Li-excessive layer functions as the anode active material). That is, in the case where ITO is thick, the area functions as the anode active material and Li of the cathode active material is consumed, and the Li-excessive area of the present invention is not easily generated. As a result, a range at which driving at 2.5 V or more is possible becomes small.

In the case where a usage range of the battery is 2.5 V or more, as is evidenced in Fig. 16, the Li inserted into the ITO functioning as the anode active material did not contribute to driving of the battery, and thus it is preferable that the ITO film be as thin as possible.

Therefore, from the perspective of obtaining a sufficiently wide region where discharge method is by the Li-excessive layer formed on the anode side interface of the solid electrolyte film 50, that is, an area where the Li-excessive layer functions as the anode active material in the charge and discharge curves, and securing battery capacity, the film thickness of the anode-side current collector protective film 68 is preferably 15 nm or less.

Further, when a battery having half or less of the Li-content theoretical capacity is defined as a practical battery, the anode-side current collector protective film preferably has a film thickness at which the Li-content theoretical capacity of the anode-side current collector protective film is half or less of the Li-theoretical capacity of the cathode active layer, if the anode-side current collector protective film is considered to be the anode active material.

### [Relation between usage efficiency and the film thickness of the anode-side current collector protective film in the solid state lithium ion battery]

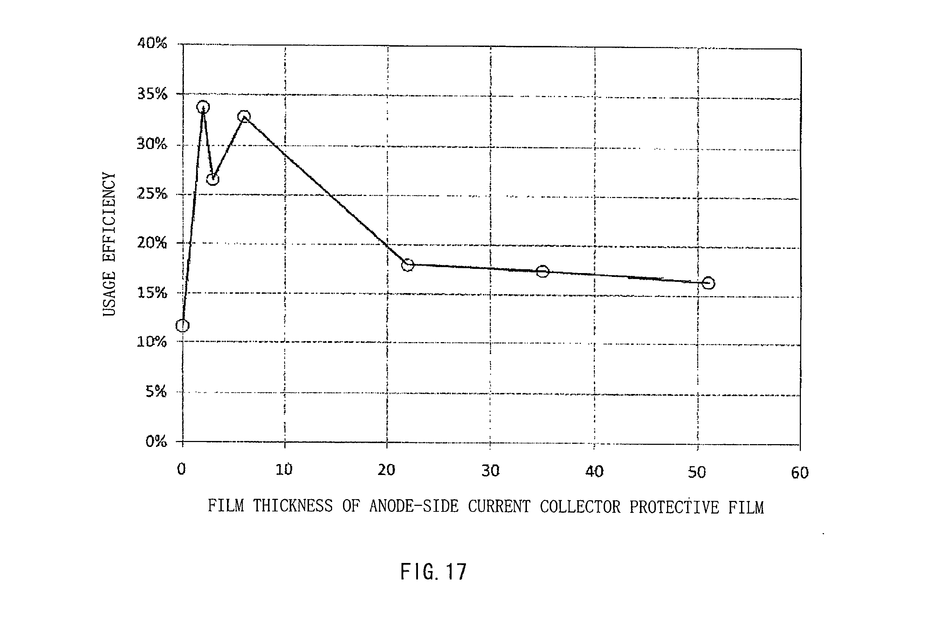

Fig. 17 is a diagram explaining relation between usage efficiency and the film thickness of the anode-side current collector protective film in the solid state lithium ion battery in the examples of the present invention. The horizontal axis indicates the film thickness of the anode-side current collector protective film, and the vertical axis indicates the usage efficiency in the battery.

In Fig. 17, the usage efficiency indicated by the vertical axis illustrates a value obtained by dividing a capacity capable of being used when the battery voltage reaches 2.5 V at the time of discharge by a theoretical capacity of a cathode active material film.

As illustrated in FIG. 17, the usage efficiency of the solid state lithium ion battery changes depending on the film thickness of the anode-side current collector protective film, and a larger usage efficiency was indicated for all batteries in Example 1 to Example 3, compared to the batteries in Comparative example 1 to Comparative example 4.

The usage efficiencies of the batteries in Example 3, Example, 2, and Example 1 in the case that the film thicknesses of the anode-side current collector protective film were 2 nm, 3 nm, and 6 nm, showed large values of about 26% to about 34%. The usage efficiencies of the batteries in Comparative example 2 to Comparative example 4 that are provided with an anode-side current collector protective film having a larger film thickness than those of the forgoing Examples was about 16% to about 18%.

Further, the usage efficiency of the battery in Comparative example 1 that is not provided with the anode-side current collector protective film was about 11 %.

As described above, in the batteries of the Examples, usage efficiency that is about twice that of the batteries of the Comparative examples was able to be obtained.

As illustrated in FIG. 17, the usage efficiency decreases as the film thickness of the anode-side current collector protective film increases. However, if the film thickness of the anode-side current collector protective film is 2 nm or more and 22 nm or less, the usage efficiency is able to be about 18%. In addition, through estimation by interpolation from FIG. 17, if the film thickness of the anode-side current collector protective film is 3 nm or more and 15 nm or less, the usage efficiency is able to be about 24% to about 34%.

As illustrated in FIG. 17, it is shown that, as the film thickness of the anode-side current collector protective film exceeds 22 nm and becomes thick, or the film thickness becomes less than 2 nm and thin, the usage efficiency is suddenly lowered. It is impractical in the case where the film thickness of the anode-side current collector protective film exceeds 22 nm and in the case where the film thickness is less than 2 nm.

From comparison between the usage efficiencies of the batteries in the Examples and the usage efficiency of the battery in Comparative example 1 that is not provided with the anode-side current collector protective film, it is evident that, to obtain a large usage efficiency, the film thickness of the anode-side current collector protective film is desirably 2 nm or more and 22 nm or less, and is more desirably 3 nm or more and 15 nm or less.

In addition, in the case where the film thickness of the anode-side current collector protective film is less than 2 mn, stability at the time of film formation of the anode-side current collector protective film is low, reproducibility of data regarding battery performance is low, film quality of the anode-side current collector protective film is not able to be a uniform film and is island-shaped, and function as the protective film for the Li-excessive layer suddenly decreases. As a result, repeated charge and discharge characteristics deteriorate in a similar manner to that in the case where the film thickness of the anode-side current collector protective film is 0 (in the case of Comparative example 1 that is not provided with the anode-side current collector protective film).

In the film formation method by sputtering, the film thickness is too thin at 2 nm, and stability of the film thickness at the time of mass production is poor. The film thickness is generally considered to be stable at 3 nm or more.

In the case where a trial is made to form a stable film thickness of the anode-side current collector protective film in battery mass production, if the film thickness of the anode-side current collector protective film is less than 3 nm, stability of the film thickness is lowered and the film thickness easily varies. Thus, in order to form a stable film thickness of the anode-side current collector protective film and secure battery mass productivity, the film thickness of the anode-side current collector protective film is desirably 3 nm or more.

In order to secure battery mass productivity and retain a larger usage efficiency, the film thickness of the anode-side current collector protective film 3 nm or more and 15 nm or less is more preferable. A battery having the anode-side current collector protective film with a film thickness of the foregoing range has usage efficiency of about 24% or more, and usage efficiency that is larger than that of any Comparative example battery was shown.

According to the present invention, as a result of the anode-side current collector protective film having a film thickness of 3 nm or more and 15 nm or less being provided, it is evident from comparison between FIG. 7 and FIG. 11, comparison between FIG. 13 and FIG. 14, and comparison between FIG. 15 and FIG. 16, that a battery having a large output voltage was achieved.

Further, as a result of the anode-side current collector film having a film thickness of 2 nm or more and 22 nm or less being provided, from comparison between FIG. 10 and FIG. 12, and FIG. 8, it is evident that a battery in which lowering of the battery capacity is small, which has high durability to repeated charge and discharging (repeated charge and discharge durability and which has superior charge and discharge characteristics was able to be achieved.

As described above, according to the present invention, even if the films composing the thin film lithium ion battery are formed from the amorphous film, a high-performance thin film solid state lithium ion secondary battery which is able to be charged and discharged in the air, which enables stable driving, which has a high battery capacity and a high output voltage, in which lowering of the battery capacity is small, which has high durability to repeated charge and discharge (repeated charge and discharge durability), and which has superior charge and discharge characteristics is able to be achieved.

Further, even if the films composing the battery are formed from the amorphous film, since the battery is formed on the inorganic insulating film provided on the substrate face, a high-performance and inexpensive thin film solid state lithium ion secondary battery which is able to be charged and discharged in the air, which enables stable driving, which is able to improve durability, and which is able to be manufactured stably at an improved manufacturing yield is able to be achieved.

The present invention has been described with reference to the embodiments. However, the present invention is not limited to the foregoing embodiments and the foregoing examples, and various modifications may be made based on the technical idea of the present invention.

### Industrial Applicability

The present invention is able to provide a high-performance and inexpensive thin film lithium ion battery that is able to be operated in the air, that enables stable driving, and that is able to improve manufacturing yield.

## Claims

1. A thin film solid state lithium ion secondary battery comprising:
an electric insulating substrate;
a cathode-side current collector film;
a cathode active material film;
a solid electrolyte film;
an anode-side current collector protective film; and
an anode-side current collector film,
wherein the cathode-side current collector film, the cathode active material film, the solid electrolyte film, the anode-side current collector protective film, and the anode-side current collector film are formed on the electric insulating substrate, and
the anode-side current collector protective film is a layer formed between the solid electrolyte film and the anode-side current collector film, and is a layer for inhibiting migration of lithium to the anode-side current collector film.

2. The thin film solid state lithium ion secondary battery according to claim 1, wherein the anode-side current collector protective film holds a total amount of lithium associated with charge and discharge roughly constant.

3. The thin film solid state lithium ion secondary battery according to claim 1, wherein a film thickness of the anode-side current collector protective film is 2 nm or more and 22 nm or less.

4. The thin film solid state lithium ion secondary battery according to claim 1, wherein a film thickness of the anode-side current collector protective film is 3 nm or more and 15 nm or less.

5. The thin film solid state lithium ion secondary battery according to claim 1, wherein a film thickness of the anode-side current collector protective film is 2 nm or more, and the anode-side current collector protective film has a film thickness at which a theoretical capacity of charge and discharge of the anode-side current collector protective film is half or less of a theoretical capacity of charge and discharge of the cathode active material film.

6. The thin film solid state lithium ion secondary battery according to claim 1, wherein the anode-side current collector protective film is formed from a conductive oxide.

7. The thin film solid state lithium ion secondary battery according to claim 6, wherein the conductive oxide includes at least any one of a Sn oxide, an In oxide, and a Zn oxide.

8. The thin film solid state lithium ion secondary battery according to claim 6, wherein the conductive oxide is an oxide to which an element for improving conductivity is added.

9. The thin film solid state lithium ion secondary battery according to any one of claims 1 to 8, wherein the electric insulating substrate is a substrate formed from an organic resin,
an insulating film formed from an inorganic material is provided on a face of the substrate, and
the cathode-side current collector film and/or the anode-side current collector film is formed on a face of the insulating film.

10. The thin film solid state lithium ion secondary battery according to claim 9, wherein an area of the insulating film is larger than an area of the cathode-side current collector film or the anode-side current collector film, or a total area of the cathode-side current collector film and the anode-side current collector film.

11. The thin film solid state lithium ion secondary battery according to claim 1, wherein the cathode active material film is formed from a material containing Li.

12. The thin film solid state lithium ion secondary battery according to claim 1, wherein the cathode active material film is formed from at least one of Mn, Co, Fe, P, Ni, and Si, and an oxide containing Li.

13. The thin film solid state lithium ion secondary battery according to claim 1, wherein a protective film that covers the cathode-side current collector film, the cathode active material film, the solid electrolyte film, the potential formation film, and the anode-side current collector film and that is formed from an ultraviolet curing resin is provided.

14. The thin film solid state lithium ion secondary battery according to claim 1, wherein the anode-side current collector film is formed from Ti or an alloy having Ti as a main component.

15. A method of manufacturing a thin film solid state lithium ion secondary battery comprising the steps of:
forming a cathode-side current collector film;
forming a cathode active material film;
forming a solid electrolyte film;
forming an anode-side current collector protective film; and
forming an anode-side current collector film,
wherein the anode-side current collector protective film is a layer formed between the solid electrolyte film and the anode-side current collector film, and is a layer for inhibiting migration of lithium to the anode-side current collector film.

16. The method of manufacturing a thin film solid state lithium ion secondary battery according to claim 15 comprising the steps of:
forming an insulating film formed from an inorganic material on a face of an electric insulating substrate formed from an organic resin; and
forming the cathode-side current collector film and/or the anode-side current collector film on a face of the insulating film.
